# EUROPEAN PATENT SPECIFICATION

(11) **EP 3 919 544 B1**
(45) Date of publication and mention of the grant of the patent: **07.02.2024**
(21) Application number: 20190068.5
(22) Date of filing: 07.08.2020
(51) Int. Cl.: C08G 65/44, C08G 65/48

(54) **POLY(ARYLENE ETHER) COPOLYMER, METHOD TO PREPARE THE SAME, AND ARTICLE DERIVED THEREFROM**
POLY(ARYLENETHER)COPOLYMER, VERFAHREN ZUR HERSTELLUNG DAVON UND DARAUS HERGESTELLTER ARTIKEL
COPOLYMÈRE POLY(ARYLÈNE ÉTHER), SON PROCÉDÉ DE PRÉPARATION ET ARTICLE DÉRIVÉ DE CEUX-CI

(30) Priority: 05.06.2020 US 202063035333 P
(43) Date of publication of application: 08.12.2021
(73) Proprietor: SHPP Global Technologies B.V., 4612 PX Bergen op Zoom (NL)
(72) Inventor: Eylem Tarkin-Tas, Delmar, Selkirk, NY New York 12158 (US); Huseyin Tas, Delmar, Selkirk, NY New York 12158 (US)
(74) Representative: Balder IP Law, S.L.

(56) References cited:
- WO-A1-2008/036454
- WO-A2-2008/103599
- US-A1- 2019 225 748

## Description

### BACKGROUND

This disclosure relates to an endcapped poly(arylene ether) copolymer, a method of forming the same, a curable thermosetting composition including the same, and articles derived therefrom.

Thermosetting resins are materials that cure to form extremely hard plastics. These materials that can be used in a wide variety of consumer and industrial products. For example, thermosets are used in protective coatings, adhesives, electronic laminates (such as those used in the fabrication of computer circuit boards), flooring, and paving applications, glass fiber-reinforced pipes, and automotive parts (including leaf springs, pumps, and electrical components). Poly(arylene ether) copolymers generally have good dielectric properties. Because of their broad use, particularly in electronic applications, such as laminates for printed circuit boards, it is desirable to provide curable thermosetting compositions including poly(arylene ether) copolymers with a lower viscosity while maintaining or improving the dielectric constant, dissipation factor, heat resistance, and water absorption. Poly (arylene ether) copolymers have been disclosed in for instance:
WO 2008/103599 that discloses a composition comprising a polyarylene ether or copolymer comprising a zwitterion; or a polyarylene polymer or copolymer comprising a zwitterion. WO 2008/036454 also discloses a poly(arylene ether) that is formed by oxidative copolymerization of monomers including 2,6-dimethylphenol and a phenyl-substituted monohydric phenol having a particular structure.

There accordingly remains a need in the art for capped poly(arylene ether) copolymers that have a desirable set of properties for use in curable thermosetting compositions. It would be a further advantage if the capped poly(arylene ether) copolymers could provide curable thermosetting compositions having improved dielectric constant, dissipation factor, heat resistance, and water absorption.
Capped poly (arylene ether) copolymers have been described in for instance US 2019 / 0225748 A1 that also describes a process for forming the said capped poly(arylene ether) copolymer, a curable composition comprising a thermosetting resin and the capped poly(arylene ether) copolymer, and a cured composition obtained by heating the curable composition for a time and a temperature sufficient to effect curing.

### BRIEF DESCRIPTION

Provided is a capped poly(arylene ether) copolymer comprising a reactive end group, wherein the capped poly(arylene ether) copolymer is derived from an alkyl, aryl-phenol.

Also provided is a process for forming the capped poly(arylene ether) copolymer including oxidatively copolymerizing a 2-(alkyl)-6-(aryl)phenol and a dihydric phenol in a solvent in the presence of a catalyst composition.

Further provided is a curable thermosetting composition comprising the capped poly(arylene ether) copolymer and an article derived from the curable thermosetting composition, wherein the article is a composite, a foam, a fiber, a layer, a coating, an encapsulant, an adhesive, a sealant, a molded component, a prepreg, a casing, a cast article, a laminate, or a combination thereof; or wherein the article is a metal clad laminate, an electronic composite, a structural composite, or a combination thereof.

The above described and other features are exemplified by the following detailed description.

### DETAILED DESCRIPTION

The present inventors have advantageously discovered that an endcapped poly(arylene ether) copolymer including a repeating unit derived from an alkyl, aryl-phenol can be included in curable thermosetting compositions to achieve improved properties over curable thermosetting compositions that include a poly(arylene ether) copolymer without a repeating unit derived from an alkyl, aryl-phenol. For example, a poly(arylene ether) copolymer including a repeating unit derived from an alkyl, aryl-phenol can provide an improved combination of properties, such as solution viscosity, dissipation factor, resin flow, coefficient of thermal expansion (CTE), and equilibrium water absorption.

Accordingly, an aspect of the present disclosure is a capped poly(arylene ether) copolymer comprising reactive end caps, wherein the capped poly(arylene ether) copolymer is derived from an alkyl, aryl-phenol. The alkyl, aryl-phenol can be, for example, a 2-(alkyl)-6-(aryl)phenol such as a 2-(C₁₋₁₂ primary or secondary alkyl)-6-(unsubstituted C₆₋₁₂ aryl)phenol. For example, the alkyl, aryl-phenol can be 2-(C₁₋₆ primary alkyl)-6-(unsubstituted phenyl)phenol.

The capped poly(arylene ether) copolymer includes at least one reactive end group. Exemplary reactive end groups include functional groups such as (meth)acrylate, (meth)acrylonitrile, vinyl benzene, allyl, epoxides including glycidyl ether, cyanate ester, amine, maleimide, carboxylic acid, carboxylic acid alkyl ester, or the like. The capped poly(arylene ether) copolymer can be a bifunctional oligomer having reactive end groups at both termini of the oligomer chain (i.e., 2 reactive end groups per oligomer molecule). Bifunctional oligomers with functional groups at both termini of an oligomer chain are also referred to as "telechelic" oligomers.

For example, a capped poly(arylene ether) copolymer includes, on average, 1.1 to 2, or 1.4 to 2, or 1.8 to 2 reactive end groups per molecule, or at least 1.5 to 2, or at least 1.70 to 2, or at least 1.8 to 2, or at least 1.9 to 2, or at least 1.95 to 2 reactive end groups per molecule, or up to 1.99 reactive end groups per molecule.

The capped poly(arylene ether) copolymer can have formula (1) or formula (2): 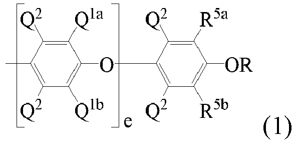 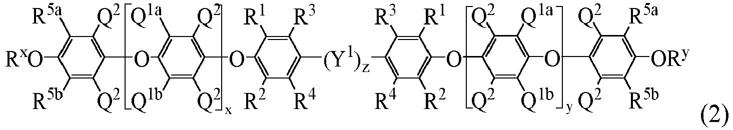 wherein each occurrence of Q^{1a} and Q^{1b} independently is halogen, C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms; and Q² is independently hydrogen, halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms. For example, each occurrence of Q^{1a} and Q^{1b} independently can be C₁₋₁₂ alkyl, C₂₋₁₂ alkenyl, or C₂₋₁₂ alkynyl.

In formula (2), R¹ to R⁴ are each independently hydrogen, halogen, C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms.

In formulas (1) and (2), each occurrence of R^{5a} is independently Q^{1a} or a (C₁₋₆-hydrocarbyl)(C₁₋₆-hydrocarbyl)aminomethylene group and each occurrence of R^{5b} is independently Q^{1b} or a (C₁₋₆-hydrocarbyl)(C₁₋₆-hydrocarbyl)aminomethylene group, provided that the capped poly(arylene ether) copolymer includes at least one repeating unit wherein Q^{1a} is a C₁₋₁₂ primary or secondary alkyl, and Q^{1b} is unsubstituted C₆₋₁₂ aryl; or at least one terminal unit where R^{5a} is a C₁₋₁₂ primary or secondary alkyl, and R^{5b} is unsubstituted C₆₋₁₂ aryl; or a combination thereof. For example, in an aspect the capped poly(arylene ether) copolymer can include one or more repeating units wherein Q^{1a} is a C₁₋₁₂ primary or secondary alkyl, and Q^{1b} is unsubstituted C₆₋₁₂ aryl.

In formula (1), e is the number of moles of the arylene ether unit.

In formula (2), x and y represent the relative mole ratios of the arylene ether units wherein x and y are each independently 0 to 50, or 0 to 30, or 0 to 20, or 0 to 15, or 0 to 10, or 0 to 8, provided that the sum of x and y is at least 2, or at least 3, or at least 4.

Y¹ in the formula (2) is a divalent linking group of any one or more of formulas 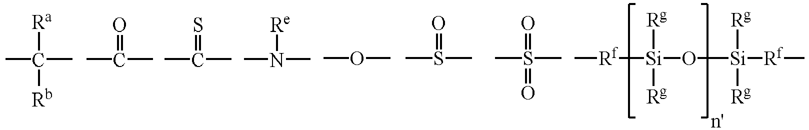 wherein each occurrence of R^{a}, R^{b}, and R^{e} is independently hydrogen, C₁₋₁₂ hydrocarbyl, or C₁₋₆ hydrocarbylene, optionally wherein R^{a} and R^{b} together are a C₄₋₈ cycloalkylene group; each occurrence of R^{f} is independently a C₁₋₆ hydrocarbylene group; each occurrence of R^{g} is independently hydrogen, C₁₋₁₂ hydrocarbyl, or C₁₋₁₂ halohydrocarbyl; and n' is 5 to 50.

In formula (1) and (2), each occurrence of R is independently any one of formulas 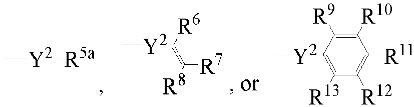 wherein Y² is a divalent linking group having one of formulas 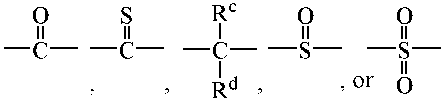 wherein each occurrence of R^{c} and R^{d} independently is hydrogen or C₁₋₁₂ alkyl; R^{5a} is an epoxide-containing group, a cyanate-containing group, or a C₁₋₁₂ hydrocarbyl optionally substituted with one or two carboxylic acid groups; each occurrence of R⁶, R⁷, and R⁸ independently is hydrogen, C₁₋₁₈ hydrocarbyl, C₂₋₁₈ hydrocarbyloxycarbonyl, nitrile, formyl, carboxylic acid, imidate, or thiocarboxylic acid; and each occurrence of R⁹, R¹⁰, R¹¹, R¹², and R¹³ independently is hydrogen, halogen, C₁₋₁₂ alkyl, C₂₋₁₂ alkenyl, hydroxy, amino, maleimide, carboxylic acid, or a C₂₋₂₀ alkyl ester.

In a specific aspect, each occurrence of Q^{1a} independently is C₁₋₁₂ primary alkyl, or C₁₋₆ primary alkyl; each occurrence of Q^{1b} independently is C₁₋₁₂ alkyl or C₆₋₁₂ aryl; or C₁₋₆ alkyl or phenyl; Q² is hydrogen; and R¹, R², R³, and R⁴ are each independently hydrogen, halogen, or C₁₋₁₂ alkyl; or hydrogen or C₁₋₆ alkyl. The capped poly(arylene ether) copolymer includes at least one repeating unit wherein Q^{1a} is the C₁₋₁₂ primary alkyl, and Q^{1b} is the unsubstituted C₆₋₁₂ aryl. For example, the capped poly(arylene ether) copolymer can include one or more repeating units of the formula wherein Q^{1a} is C₁₋₆ primary alkyl, and Q^{1b} is unsubstituted phenyl.

In another specific aspect, the capped poly(arylene ether) copolymer has formula (2a): 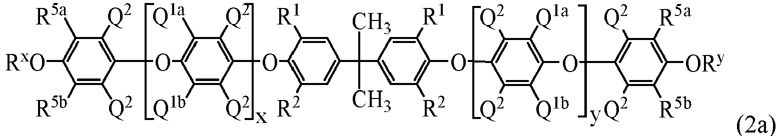 wherein Q^{1a}, Q^{1b}, Q², R¹, R², R^{5a}, R^{5b}, R^{x}, R^{y}, x, and y are as defined in formulas (1) and (2); and R^{1a} and R^{1b} are each independently hydrogen, or wherein R¹ and R² are each independently hydrogen or C₁₋₆ alkyl. For example, the capped poly(arylene ether) copolymer can be derived from a reaction of the dihydric phenol and 2-methyl-6-phenylphenol.

In another specific aspect, the capped poly(arylene ether) copolymer has formula (2b): 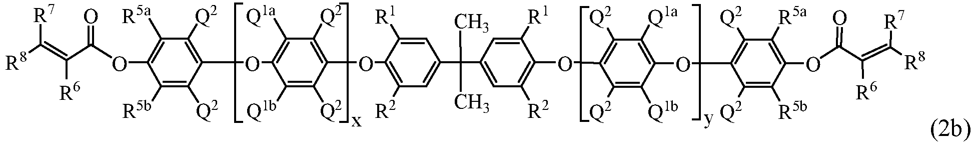 wherein R¹, R², R⁶ to R⁸, R^{5a}, R^{5b}, Q^{1a}, Q^{1b}, Q², x, and y are as defined in formulas (1) and (2).

The capped poly(arylene ether) copolymer can include structural units derived from the monohydric phenol and the dihydric phenol in a mole ratio of 3:1 to 110:1. Within this range, the ratio can be at least 3.5:1, or at least 5:1, or at least 7:1, or up to 50:1, or up to 25:1.

As disclosed herein, the capped poly(arylene ether) copolymer is derived from an alkyl,aryl-phenol, or for example, the capped poly(arylene ether) copolymer can be derived from a reaction of a dihydric phenol and a monohydric phenol including a 2-(alkyl)-6-(aryl)phenol. In one or more aspects, the capped poly(arylene ether) copolymer can be the product of oxidative copolymerization of monomers including a monohydric phenol or a mixture of monohydric phenols, and optionally a dihydric phenol. An aspect provides a process for forming the capped poly(arylene ether) copolymer, which includes oxidatively copolymerizing at least one monohydric phenol and a dihydric phenol in a solvent in the presence of a catalyst. For example, the process for forming the capped poly(arylene ether) copolymer can include oxidatively copolymerizing a 2-(alkyl)-6-(aryl)phenol monomer, optionally one more other monohydric phenol monomers, and a dihydric phenol monomer in a solvent in the presence of a catalyst composition.

The oxidative polymerization can be by continuous addition of oxygen to a reaction mixture comprising the monomers, solvent, and catalyst composition to provide a hydroxyl-terminated poly(arylene ether) copolymer (i.e., an uncapped copolymer) having the structure of formula (1) or (2) and wherein R, R^{x}, and R^{y} are hydrogen atoms. The molecular oxygen (O₂) can be provided as air or pure oxygen. The polymerization catalyst can be a metal complex comprising a transition metal cation. The metal cation can include cations from Group VIB, VIIB, VIIIB, or IB of the periodic table, or a combination thereof, preferably chromium, manganese, cobalt, copper, or a combination thereof. Exemplary metal salts include cuprous chloride, cupric chloride, cuprous bromide, cupric bromide, cuprous iodide, cupric iodide, cuprous sulfate, cupric sulfate, cuprous tetraamine sulfate, cupric tetraamine sulfate, cuprous acetate, cupric acetate, cuprous propionate, cupric butyrate, cupric laurate, cuprous palmitate, cuprous benzoate, and the corresponding manganese salts and cobalt salts. Alternatively, it is also possible to add a metal or a metal oxide and an inorganic acid, organic acid, or an aqueous solution of such an acid and form the corresponding metal salt or hydrate in situ. For example, cuprous oxide and hydrobromic acid can be added to generate cuprous bromide in situ.

The polymerization catalyst can further include an amine ligand, for example, a monoamine, an alkylene diamine, or a combination thereof. Monoamines include dialkylmonoamines (such as di-n-butylamine, DBA) and trialkylmonoamines (such as N,N-dimethylbutylamine, DMBA). Diamines include alkylenediamines, such as N,N'-di-tert-butylethylenediamine, DBEDA.

Exemplary dialkylmonoamines include dimethylamine, di-n-propylamine, di-n-butylamine, di-sec-butyl amine, di-tert-butylamine, dipentylamine, dihexylamine, dioctylamine, didecylamine, dibenzylamine, methylethylamine, methylbutylamine, dicyclohexylamine, N-phenylethanolamine, N-(p-methyl)phenylethanolamine, N-(2,6-dimethyl)phenylethanolamine, N-(p-chloro)phenylethanolamine, N-ethylaniline, N-butyl aniline, N-methyl-2-methylaniline, N-methyl-2,6-dimethylaniline, diphenylamine, and the like, or a combination comprising at least one of the foregoing. Suitable trialkylmonoamines include trimethylamine, triethylamine, tripropylamine, tributylamine, butyldimethylamine, phenyldiethylamine, or the like, or a combination thereof.

Exemplary alkylenediamines include those having the formula:

(R^{bb})₂N-R^{aa}-N(R^{bb})₂

wherein R^{aa} is a substituted or unsubstituted divalent residue; and each R^{bb} is independently hydrogen or C₁₋₈ alkyl. In some aspects, two or three aliphatic carbon atoms can form the closest link between the two diamine nitrogen atoms. Specific alkylenediamine ligands include those in which R^{aa} is dimethylene (-CH₂CH₂-) or trimethylene (-CH₂CH₂CH₂-). R^{bb} can be independently hydrogen, methyl, propyl, isopropyl, butyl, or a C₄₋₈ alpha-tertiary alkyl group. Examples of alkylenediamine ligands include N,N,N',N' tetramethylethylene diamine (TMED), N,N'-di-tert-butylethylenediamine (DBEDA), N,N,N',N'-tetramethyl-1,3-diaminopropane (TMPD), N-methyl-1,3-diaminopropane, N,N'-dimethyl-1,3-diaminopropane, N,N,N'-dimethyl-1,3-diaminopropane, N-ethyl-1,3-diaminopropane, N-methyl-1,4-diaminobutane, N,N'-trimethyl-1,4-diaminobutane, N,N,N'-trimethyl-1,4-diaminobutane, N,N,N',N'-tetramethyl-1,4-diaminobutane, N,N,N',N'-tetramethyl-1,5-diaminopentane, or a combination comprising at least one of the foregoing. In some embodiments, the amine ligand is di-n-butylamine (DBA), N,N-dimethylbutylamine (DMBA), N,N'-di-tert-butylethylenediamine (DBEDA), or a combination thereof. The catalyst can be prepared in situ by mixing a metal ion source (e.g., cuprous oxide and hydrobromic acid) and amine ligands. For example, the polymerization catalyst can include a copper ion, a bromide ion, and N,N'-di-tert-butylethylenediamine.

The monohydric phenol can have the structure of formula (3): 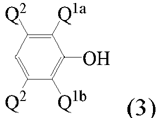 wherein Q^{1a} and Q^{1b} are as defined for formula (1). Exemplary monohydric phenols include 2-methylphenol, 2,5-dimethylphenol, 2,6-dimethylphenol, 2,6-diallylphenol, 2,3,6-trimethylphenol, 2,6-dimethyl-3-allylphenol, 2-methyl-6-phenylphenol, 2-ethyl-6-phenylphenol, 2-allyl-6-methylphenol, 2,6-diphenylphenol, or the like, or a combination thereof.

In addition to the monohydric phenol, the monomers can include a dihydric phenol, wherein the dihydric phenol has the structure of formula (4): 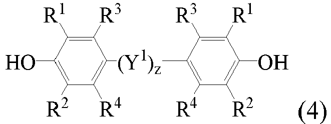 wherein R¹ to R⁴, Y¹, and z are as defined for formula (2).

For example, the dihydric phenol can be 1,1-bis(3,5-dimethyl-4-hydroxyphenyl) ethane, 1,1-bis(3-chloro-4-hydroxyphenyl)ethane, 1,1-bis(3-methyl-4-hydroxyphenyl)-ethane, 1,2-bis(4-hydroxy-3,5-dimethylphenyl)-1,2-diphenylethane, 1,2-bis(3-methyl-4-hydroxyphenyl) - 1,2-diphenylethane, 1,2-bis(3-methyl-4-hydroxyphenyl)ethane, 2,2'-binaphthol, 2,2'-biphenol, 2,2'-dihydroxy-4,4'-dimethoxybenzophenone, 2,2'-dihydroxy-4-methoxybenzo-phenone, 2,2'-dihydroxybenzophenone, 2,2-bis(3,5-dichloro-4-hydroxyphenyl)propane, 2,2-bis(3-bromo-4-hydroxyphenyl)propane, 2,2-bis(3-phenyl-4-hydroxyphenyl)propane, 2,2-bis(3-methyl-4-hydroxyphenyl)propane, 2,2-bis(3,5-dimethyl-4-hydroxyphenyl)propane, 1,1-bis(3,5-dimethyl-4-hydroxyphenyl)-1-phenylethane, 1,1-bis(3-chloro-4-hydroxyphenyl)-1-phenylethane, 1,1-bis(3-methyl-4-hydroxyphenyl)-1-phenylethane, 2,2-bis(4-hydroxy-3,5-dimethyl phenyl)-1-phenylpropane, 2,2-bis(4-hydroxy-3,5-dimethyl phenyl)hexane, 2,2-bis(4-hydroxy-3,5-dimethylphenyl)pentane, 2,2-bis(3-methyl-4-hydroxynaphthyl)propane, 2,2-bis(3-methyl-4-hydroxyphenyl)-1-phenylpropane, 2,2-bis(3-methyl-4-hydroxyphenyl)hexane, 2,2-bis(3-methyl-4-hydroxyphenyl)pentane, 2,2'-methylenebis(4-methylphenol), 2,2'-methylenebis[4-methyl-6-(1-methylcyclohexyl)phenol], 3,3',5,5'-tetramethyl-4,4'-biphenol, 3,3'-dimethyl-4,4'-biphenol, bis(2-hydroxyphenyl)-methane, bis(4-hydroxy-2,6-dimethyl-3-methoxyphenyl)methane, bis(3,5-dimethyl-4-hydroxyphenyl)methane, bis(3-methyl-4-hydroxyphenyl)methane, bis-(4-hydroxy-3,5-dimethyl phenyl)-cyclohexylmethane, bis(4-hydroxy-3,5-dimethyl phenyl)phenylmethane, bis(3-methyl-4-hydroxyphenyl)cyclohexylmethane, bis(3-methyl-4-hydroxyphenyl)methane, bis(3,5-dimethyl-4-hydroxyphenyl)methane, bis(3-methyl-4-hydroxyphenyl)phenylmethane, 2,2',3,3',5,5'-hexamethyl-4,4'-biphenol, octafluoro-4,4'-biphenol, 2,3,3',5,5'-pentamethyl-4,4'-biphenol, 1,1-bis(3,5-dibromo-4-hydroxyphenyl)cyclohexane 1,1-bis(3,5-dimethyl-4-hydroxyphenyl)cyclohexane, bis(3-methyl-4-hydroxyphenyl)cyclohexane, tetrabromobisphenol, tetrabromobisphenol A, tetrabromobisphenol S, 2,2'-diallyl-4,4'-bisphenol A, 2,2'-diallyl-4,4'-bisphenol S, 3,3',5,5'-tetramethyl-4,4'-bisphenol sulfide, 3,3'-dimethyl bisphenol sulfide, 3,3',5,5'-tetramethyl-4,4'-bisphenol sulfone, or a combination thereof.

In some aspects, the capped poly(arylene ether) copolymer can be a poly(arylene ether)-polysiloxane block copolymer that is a block copolymer comprising at least one poly(arylene ether) block and at least one polysiloxane block.

The poly(arylene ether)-polysiloxane block copolymer can prepared by an oxidative copolymerization method including oxidatively copolymerizing a monomer mixture comprising a monohydric phenol and a hydroxyaryl-terminated polysiloxane. For example, the monomer mixture comprises 70 to 99 parts by weight of the monohydric phenol and 1 to 30 parts by weight of the hydroxyaryl-terminated polysiloxane, based on the total weight of the monohydric phenol and the hydroxyaryl-terminated polysiloxane. The hydroxyaryl-terminated polysiloxane can comprise a plurality of repeating units having the structure of formula (5): 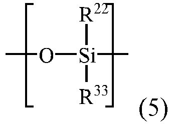 wherein each occurrence of R²² and R³³ is independently hydrogen, C₁₋₁₂ hydrocarbyl, or C₁₋₁₂ halohydrocarbyl; and two terminal units having the structure of formula (5a): 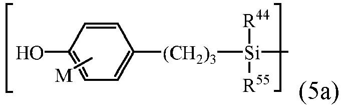 wherein M is hydrogen, C₁₋₁₂ hydrocarbyl, C₁₋₁₂ hydrocarbyloxy, or halogen, and wherein each occurrence of R⁴⁴ and R⁴⁵ is independently hydrogen, C₁₋₁₂ hydrocarbyl or C₁₋₁₂ halohydrocarbyl. In a specific aspect, each occurrence of R⁸ and R⁹ is methyl, and Y is methoxy.

For example, the monohydric phenol can be 2,6-dimethylphenol, and the hydroxyaryl-terminated polysiloxane has the structure of formula (5b): 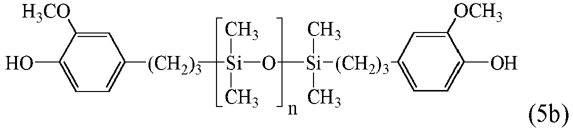 wherein n is, on average, 5 to 100, or 5 to 45, or 30 to 60. Accordingly, the structural fragment of the capped poly(arylene ether) copolymer having the formula (6): 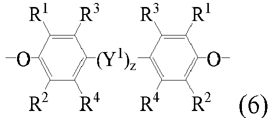 can be of the formula (6a): 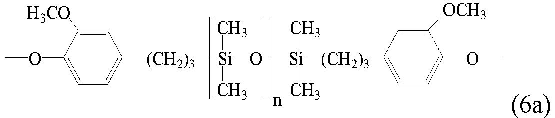 wherein n is 5 to 100, or 5 to 45, or 30 to 60.

The capped poly(arylene ether) copolymer can also include 10 to 70 mole percent of copolymer chains comprising a terminal unit derived from the dihydric phenol. For example, when the dihydric phenol is 2,2-bis(3,5-dimethyl-4-hydroxyphenyl)propane, the poly(arylene ether) copolymer can include 10 to 70 mole percent of copolymer chains comprising a terminal unit having the structure of formula (7): 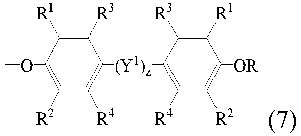 wherein R¹ to R⁴, Y¹, and z are as provided in formula (1) or (2), and R is R^{x} or R^{y}.

As disclosed above, the capped poly(arylene ether) copolymer is a functional arylene ether oligomer having particular end groups, and the method of making the functionalized arylene ether oligomer can further include reacting the hydroxy-terminated poly(arylene ether) copolymer with a capping agent. For example, the process for forming the capped poly(arylene ether) copolymer can further include reacting a capping agent and an uncapped poly(arylene ether) copolymer comprising a phenolic end group under conditions effective to provide a reaction mixture including the capped poly(arylene ether) copolymer.

The capping agent is not particularly limited, and can be a compound including unsaturation, an epoxy, a benzoxazine, an isocyanate, a cyanate ester, a melamine, a cyanophenyl, a maleimide, a phthalonitrile, a cycloalkylphenyl, an ethoxylate, a urethane, an anhydride, an allylhydroxypropyl, or the like, or a combination thereof. The person of skill in the art can determined the capping agent based on the desired functionality of the capped poly(arylene ether) copolymer. For example, a vinyl benzyl ether end group can be prepared using a curing agent that is a vinyl benzyl halide (e.g., vinyl benzyl chloride), a (meth)acrylic end group can be prepared using a curing agent that is a (meth)acrylic acid halide or a (meth)acrylic anhydride.

The capping agent and the uncapped poly(arylene ether) copolymer are reacted in a solvent. In some aspects, the uncapped poly(arylene ether) is obtained as a powder that is subsequently combined with the capping agent and a solvent. In other aspects, the uncapped poly(arylene ether) is obtained as a solution from the oxidative polymerization reaction without removing the solvent, and the uncapped poly(arylene ether) is not isolated as a powder from the solvent solution. For example, the capping agent can be added directly to a solution of the uncapped poly(arylene ether) copolymer that is directly obtained from oxidatively copolymerizing the 2-(alkyl)-6-(aryl)phenol and the dihydric phenol in a solvent, wherein the solvent is not removed from the reaction product before the reacting with the capping agent.

In an aspect, the capped poly(arylene ether) copolymer can have an intrinsic viscosity of 0.03 to 0.13 deciliter per gram (dL/g), or 0.03 to 0.18 dL/g, or 0.04 to 0.15 dL/g at 25°C in chloroform using an Ubbelohde viscometer. The capped poly(arylene ether) copolymer can have a weight average molecular weight (M_{w}) of 500 to 50,000 g/mol, or 1,000 to 25,000 g/mol, or 1,500 to 12,500 g/mol, as determined by gel permeation chromatography (GPC) using polystyrene standards. The capped poly(arylene ether) copolymer can have a number average molecular weight (Mₙ) of 500 to 10,000 grams per mole (g/mol), or 750 to 5,000 g/mol, or 500 to 40,00 g/mol, as determined by GPC using polystyrene standards. In some aspects, the capped poly(arylene ether) copolymer has a ratio of M_{w} to Mₙ (also referred to as "polydispersity" of 1.9 to 3, or at least 2, or up to 2.8, or up to 2.6, or up to 2.4.

Also provided is a curable thermosetting composition including the capped poly(arylene ether) copolymer. For example, the capped poly(arylene ether) copolymer can be present in the curable thermosetting composition in an amount of 1 to 95 weight percent (wt%), or 5 to 95 wt%, or 10 to 85 wt%, or 20 to 80 wt%, 30 to 70 wt%, or 5 to 30 wt%, or 5 to 15 wt%, based on the total weight of the curable thermosetting composition.

The curable thermosetting composition can further include one or more of a crosslinking agent, a curing agent, a curing catalyst, a curing initiator, or a combination thereof. In some aspects, the curable thermosetting composition can further include one or more of a flame retardant, a filler, a coupling agent, or a combination thereof. For example, the curable thermosetting composition can include one or more of a crosslinking agent, a curing agent, a curing catalyst, a curing initiator, or a combination thereof; and can further include one or more of a flame retardant, a filler, a coupling agent, or a combination thereof.

There is considerable overlap among thermosetting resins, crosslinking agents, and coupling agents. As used herein, the term "crosslinking agent" includes compounds that can be used as thermosetting resins, crosslinkers, coupling agents, or a combination thereof. For example, in some instances a compound that is a thermosetting resin could also be used as a crosslinking agent, a coupling agent, or both.

The thermosetting resins are not particularly limited, and thermosetting resins can be used alone or in combinations of two or more thermosetting resins (e.g., including one or more auxiliary thermosetting resins). Exemplary thermosetting resins include epoxy resins, cyanate ester resins, (bis)maleimide resins, (poly)benzoxazine resins, vinyl resins (e.g., a vinyl benzyl ether resin), phenolic resins, alkyd resins, unsaturated polyester resins, arylcyclobutene resins, perfluorovinyl ether resins, monomers, oligomers or polymers with curable unsaturation (e.g., a vinyl functionality), or the like, or a combination thereof.

The epoxy resin can generally be any epoxy resin that is suitable for use in thermosetting resins. The term "epoxy resin" in this context refers to a curable composition of oxirane ring-containing compounds as described in, for example, C. A. May, Epoxy Resins, 2.sup.nd Edition, (New York & Basle: Marcel Dekker Inc.), 1988. The epoxy resins can include bisphenol A type epoxy resins such as those obtained from bisphenol A and resins obtained by substituting at least one position of the 2-position, the 3-position and the 5-position of bisphenol A with a halogen atom, an alkyl group having 6 or less carbon atoms or a phenyl group; bisphenol F type epoxy resins such as those obtained from bisphenol F and a resin obtained by substituting at least one position of the 2-position, the 3-position and the 5-position of bisphenol F with a halogen atom, an alkyl group having 6 or less carbon atoms or a phenyl group; glycidyl ether compounds derived from bivalent or tri- or more-valent phenols such as hydroquinone, resorcinol, tris-4-(hydroxyphenyl)methane and 1,1,2,2-tetrakis(4-hydroxyphenyl)ethane; a novolak type epoxy resin derived from a novolak resin which is a reaction product between phenols such as phenol and o-cresol and formaldehyde, including bisphenol A novolak type epoxy resins and cresol novolak type epoxy resins; cyclic aliphatic epoxy compounds such as 2,2-bis(3,4-epoxycyclohexyl)propane, 2,2-bis[4-(2,3-epoxypropyl)cyclohexyl]propane, vinylcyclohexene dioxide, 3,4-epoxycyclohexylmethyl-3,4-epoxycyclohexane carboxylate; dicyclopentadiene-containing polyepoxides; amine type epoxy resins derived from aniline, p-aminophenol, m-aminophenol, 4-amino-m-cresol, 6-amino-m-cresol, 4,4'-diaminodiphenyl-ethane, 3,3'-diaminodiphenylmethane, 4,4'-diaminodiphenyl ether, 3,4'-diaminodiphenylether, 1,4-bis(4-aminophenoxy)benzene, 1,4-bis(3-aminophenoxy)-benzene, 1,3-bis(4-aminophenoxy)-benzene, 1,3-bis(3-aminophenoxy)benzene, 2,2-bis(4-amino-phenoxyphenyl)propane, p-phenylenediamine, m-phenylenediamine, 2,4-toluenediamine, 2,6-toluenediamine, p-xylylenediamine, m-xylylenediamine, 1,4-cyclohexane-bis(methylamine), 5-amino-1-(4'-aminophenyl)-1,3,3-trimethylindane, 6-amino-1-(4'-aminophenyl)-1,3,3-trimethyl-indane or the like; heterocyclic epoxy compounds, and glycidyl ester type epoxy compounds, for example, those derived from glycidyl ester of aromatic carboxylic acids such as p-oxybenzoic acid, m-oxybenzoic acid, terephthalic acid, and isophthalic acid. An "epoxy resin" can also include reaction products of compounds containing two or more epoxy groups and aromatic dihydroxy compounds, which can be optionally halogen-substituted and can be used alone or in a combination of two or more.

Cyanate esters are not limited, and any resin composed of cyanate ester monomers, which polymerize to form a polymer containing a plurality of cyanate ester (-OCN) functional groups can be used. Cyanate ester monomers, prepolymers (i.e., partially polymerized cyanate ester monomers or blends of cyanate ester monomers), homopolymers, and copolymers made using cyanate ester precursors, and combinations of these compounds. For example, cyanate esters can be prepared according to methods as disclosed in "Chemistry and Technology of Cyanate Ester Resins", by Ian Hamerton, Blackie Academic and Professional; U.S. Pat. No. 3,553,244, and JP-A-7-53497. Exemplary cyanate ester resins include 2,2-bis(4-cyanatophenyl)-propane, bis(4-cyanatophenyl)ethane, bis(3,5-dimethyl-4-cyanatophenyl)methane, 2,2-bis(4-cyanatophenyl)-1,1,1,3,3,3-hexafluoropropane, α,α'-bis(4-cyanatophenyl)-m-diisopropylbenzene, cyanate ester resins prepared from dicyclopentadiene-phenol copolymers, and prepolymers prepared from these monomers. An example of a prepolymer is PRIMASET BA-230S (Lonza). The cyanate ester prepolymers can be homopolymers or can be copolymers that incorporate other monomers. Examples of such copolymers include BT resins available from Mitsubishi Gas Chemical, such as, BT 2160 and BT2170, which are prepolymers made with cyanate ester monomers and bismaleimide monomers. Other cyanate esters polymers, monomers, prepolymers, and blends of cyanate ester monomers with other non-cyanate ester monomers are disclosed in US 7393904, US 7388057, US 7276563, and US 7192651.

Bismaleimide resins can be produced by reaction of a monomeric bismaleimide with a nucleophile such as a diamine, aminophenol, or amino benzhydrazide, or by reaction of a bismaleimide with diallyl bisphenol A. Exemplary bismaleimide resins include 1,2-bismaleimidoethane, 1,6-bismaleimidohexane, 1,3-bismaleimidobenzene, 1,4-bismaleimidobenzene, 2,4-bismaleimidotoluene, 4,4'-bismaleimidodiphenylmethane, 4,4'-bismaleimido-diphenylether, 3,3'-bismaleimidodiphenylsulfone, 4,4'-bismaleimido-diphenylsulfone, 4,4'-bismaleimidodicyclohexylmethane, 3,5-bis(4-maleimidophenyl)pyridine, 2,6-bismaleimido-pyridine, 1,3-bis(maleimidomethyl)cyclohexane, 1,3-bis(maleimidomethyl)benzene, 1,1-bis(4-maleimidophenyl)cyclohexane, 1,3-bis(dichloromaleimido)benzene, 4,4'-bis(citracon-imido)diphenylmethane, 2,2-bis(4-maleimidophenyl)propane, 1-phenyl-1,1-bis(4-maleimidophenyl)ethane, N,N-bis(4-maleimidophenyl)toluene, 3,5-bismaleimido-1,2,4-triazole N,N'-ethylenebismaleimide, N,N'-hexamethylenebismaleimide, N,N'-m-phenylene-bismaleimide, N,N'-p-phenylenebismaleimide, N,N'-4,4'-diphenylmethanebismaleimide, N,N'-4,4'-diphenyl-etherbismaleimide, N,N'-4,4'-diphenylsufonebismaleimide, N,N'-4,4'-dicyclohexylmethanebismaleimide, N,N'-α,α'-4,4'-dimethylenecyclohexanebismaleimide, N,N'-m-methaxylene-bismaleimide, N,N'-4,4'-diphenylcyclohexanebismaleimide, and N,N'-methylene-bis(3-chloro-p-phenylene)bismaleimide, as well as those disclosed in US 3,562,223; US 4,211,860; and US 4,211,861, or as prepared by methods as described, for example, in US 3,018,290.

The benzoxazine compounds have a benzoxazine ring in the molecule. Exemplary benzoxazine monomers can be prepared from the reaction of aldehydes, phenols, and primary amines with or without solvent. The phenolic compounds for forming benzoxazines include phenols and polyphenols. The use of polyphenols with two or more hydroxyl groups reactive in forming benzoxazines can result in branched, crosslinked, or a combination of branched and crosslinked products. The groups connecting the phenolic groups into a phenol can be branch points or connecting groups in the polybenzoxazine.

Exemplary phenols for use in the preparation of benzoxazine monomers include phenol, cresol, resorcinol, catechol, hydroquinone, 2-allylphenol, 3-allylphenol, 4-allylphenol, 2,6-dihydroxynaphthalene, 2,7-dihydrooxynapthalene, 2-(diphenyl-phosphoryl)hydroquinone, 2,2'-biphenol, 4,4-biphenol, 4,4'-isopropylidenediphenol, 4,4'-isopropylidenebis(2-methylphenol), 4,4'-isopropylidenebis(2-allylphenol), 4,4'(1,3-phenylenediisopropylidene)bisphenol (bisphenol M), 4,4'-isopropylidenebis(3-phenylphenol) 4,4'-(1,4-phenylenediisoproylidene)-bisphenol, 4,4'-ethylidenediphenol, 4,4'-oxydiphenol, 4,4'-thiodiphenol, 4,4'-sufonyldiphenol, 4,4'-sulfinyldiphenol, 4,4'-hexafluoroisopropylidene)bisphenol, 4,4'(1-phenylethylidene)-bisphenol, bis(4-hydroxyphenyl)-2,2-dichloroethylene, bis(4-hydroxyphenyl)methane, 4,4'-(cyclopentylidene)diphenol, 4,4'-(cyclohexylidene)diphenol, 4,4'-(cyclododecylidene)diphenol 4,4'-(bicyclo[2.2.1]heptylidene)diphenol, 4,4'-(9H-fluorene-9,9-diyl)diphenol, isopropylidene-bis(2-allylphenol), 3,3-bis(4-hydroxyphenyl)isobenzofuran-1(3H)-one, 1-(4-hydroxyphenyl)-3,3-dimethyl-2,3-dihydro-1H-inden-5-ol, 3,3,3',3'-tetramethyl-2,2',3,3'-tetrahydro-1,1'-spirobi-[indene] 5,6'-diol, dihydroxybenzophenone, tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tetrakis(4-hydroxyphenyl)ethane dicyclopentadienylbis(2,6-dimethyl phenol), dicyclopentadienyl bis(ortho-cresol), dicyclopentadienyl bisphenol, or the like.

The aldehydes used to form the benzoxazine can be any aldehyde, such as an aldehyde having 1 to 10 carbon atoms. For example, the aldehyde can be formaldehyde. The amine used to form the benzoxazine can be an aromatic amine, an aliphatic amine, an alkyl substituted aromatic, or an aromatic substituted alkyl amine. The amine can be a polyamine, for example to prepare polyfunctional benzoxazine monomers for crosslinking.

The amines for forming benzoxazines have 1 to 40 carbon atoms unless they include aromatic rings, and then they can have 6 to 40 carbon atoms. The amine of di- or polyfunctional can be a branch point to connect one polybenzoxazine to another.

In some examples, thermal polymerization at 150 to 300° C can be used for polymerizing benzoxazine monomers. The polymerization can be done in bulk, from solution, or otherwise. Catalysts, such as carboxylic acids, can be used to reduce the polymerization temperature or accelerate the polymerization rate at the same temperature.

Vinyl benzyl ether resins can be prepared from condensation of a phenol with a vinyl benzyl halide, such as vinyl benzyl chloride. Bisphenol-A and trisphenols and polyphenols are generally used to produce poly(vinylbenzyl ethers) which can be used to produce crosslinked thermosetting resins. Exemplary vinyl benzyl ethers can include those vinylbenzyl ethers produced from reaction of a vinylbenzyl halide with resorcinol, catechol, hydroquinone, 2,6-dihydroxynaphthalene, 2,7-dihydroxynaphthalene, 2-(diphenyl-phosphoryl)hydroquinone, bis(2,6-dimethylphenol) 2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3'5-dibromobiphenol, 4,4'-isopropylidenediphenol, 4,4'-isopropylidenebis(2,6-dibromophenol), 4,4'-isopropylidenebis(2,6-dimethylphenol) (teramethylbisphenol A), 4,4'-isopropylidenebis(2-methylphenol), 4,4'-ispropylidenebis(2-allylphenol), 4,4'(1,3-phenylenediisopropylidene)bisphenol, 4,4'-isopropyli-denebis(3-phenylphenol) 4,4'-(1,4-phenylenediisoproylidene)bisphenol, 4,4'-ethylidenediphenol, 4,4'-oxydiphenol, 4,4'-thiodiphenol, 4,4'-thiobis(2,6-dimethylphenol), 4,4'-sufonyldiphenol, 4,4'-sulfonylbis(2,6-dimethylphenol) 4,4'-sulfinyl-diphenol, 4,4'-hexafluoroisopropylidene)bisphenol, 4,4'(1-phenylethylidene) bisphenol, bis(4-hydroxyphenyl)-2,2-dichloroethylene, bis(4-hydroxy-phenyl)methane, bis(2,6-dimethyl-4-hydroxyphenyl)methane, 4,4'-(cyclopentylidene)diphenol, 4,4'-(cyclohexylidene)diphenol, 4,4'-(cyclododecylidene)diphenol 4,4'-(bicyclo [2.2.1]heptylidene)diphenol, 4,4'-(9H-fluorene-9,9-diyl)diphenol, 3,3-bis(4-hydroxyphenyl)-isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol, dihydroxybenzophenone, tris(4-hydroxyphenyl)methane, tris(4-hydroxyphenyl)ethane, tris(4-hydroxyphenyl)-propane, tris(4-hydroxyphenyl)butane, tris(3-methyl-4-hydroxyphenyl)methane, tris(3,5-dimethyl-4-hydroxy-phenyl)methane, tetrakis(4-hydroxyphenyl)ethane, tetrakis(3,5-dimethyl-4-hydroxyphenyl)-ethane, bis(4-hydroxyphenyl)phenylphosphine oxide, dicyclopentadienyl-bis(2,6-dimethyl phenol), dicyclopentadienyl bisphenol, or the like.

Arylcyclobutenes include those derived from compounds of the structure 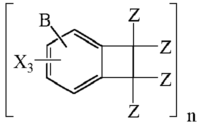 wherein B is an organic or inorganic radical of valence n (including carbonyl, sulfonyl, sulfinyl, sulfide, oxy, alkylphosphonyl, arylphosphonyl, isoalkylidene, cycloalkylidene, arylalkylidene, diarylmethylidene, methylidene dialkylsilanyl, arylalkylsilanyl, diarylsilanyl and C₆₋₂₀ phenolic compounds); each occurrence of X is independently hydroxy or C₁₋₂₄ hydrocarbyl (including linear and branched alkyl and cycloalkyl); and each occurrence of Z is independently hydrogen, halogen, or C₁₋₁₂ hydrocarbyl; and n is 1 to 1000 ,or 1 to 8, or n is 2, 3, or 4. Other exemplary arylcyclobutenes and methods of arylcyclobutene synthesis can be found in US 4,743,399, US 4,540,763, US 4,642,329, US 4,661,193, US 4,724,260, and 5391,650.

Perfluorovinyl ethers are typically synthesized from phenols and bromotetrafluoroethane followed by zinc catalyzed reductive elimination producing ZnFBr and the desired perfluorovinylether. By this route bis, tris, and other polyphenols can produce bis-, tris- and poly(perfluorovinylether)s. Phenols useful in their synthesis include resorcinol, catechol, hydroquinone, 2,6-dihydroxy naphthalene, 2,7-dihydroxynapthalene, 2-(diphenylphosphoryl)hydroquinone, bis(2,6-dimethylphenol) 2,2'-biphenol, 4,4-biphenol, 2,2',6,6'-tetramethylbiphenol, 2,2',3,3',6,6'-hexamethylbiphenol, 3,3',5,5'-tetrabromo-2,2'6,6'-tetramethylbiphenol, 3,3'-dibromo-2,2',6,6'-tetramethylbiphenol, 2,2',6,6'-tetramethyl-3,3'5-dibromobiphenol, 4,4'-isopropylidenediphenol (bisphenol A), 4,4'-isopropylidenebis(2,6-dibromophenol), 4,4'-isopropylidenebis(2,6-dimethylphenol), 4,4'-isopropylidenebis(2-methylphenol), 4,4'-isopropylidenebis(2-allylphenol), 4,4'(1,3-phenylenediisopropylidene)-bisphenol, 4,4'-isopropylidenebis(3-phenylphenol) 4,4'-(1,4-phenylenediisoproylidene)-bisphenol, 4,4'-ethylidenediphenol, 4,4'oxydiphenol, 4,4'thiodiphenol, 4,4'thiobis(2,6-dimethylphenol), 4,4'-sufonyldiphenol, 4,4'-sulfonylbis(2,6-dimethylphenol) 4,4'-sulfinyldiphenol, 4,4'-hexafluoroisoproylidene)bisphenol, 4,4'(1-phenylethylidene)-bisphenol, bis(4-hydroxyphenyl)-2,2-dichloroethylene, bis(4-hydroxyphenyl)-methane, bis(2,6-dimethyl-4-hydroxyphenyl)methane, 4,4'-(cyclopentylidene)diphenol, 4,4'-(cyclohexylidene)diphenol, 4,4'-(cyclododecylidene)diphenol 4,4'-(bicyclo[2.2.1]heptylidene)-diphenol, 4,4'-(9H-fluorene-9,9-diyl)diphenol, 3,3-bis(4-hydroxyphenyl)isobenzofuran-1(3H)-one, 1-(4-hydroxyphenyl)-3,3-dimethyl-2,3-dihydro-1H-inden-5-ol, 1-(4-hydroxy-3,5-dimethylphenyl)-1,3,3,4,6-pentamethyl-2,3-dihydro-1H-inden-5-ol, 3,3,3',3'-tetramethyl-2,2',3,3'-tetrahydro-1,1'-spirobi[indene]-5,6'-diol (Spirobiindane), dihydroxybenzophenone, tris(4-hydroxyphenyl)methane, tris(4-hydroxyphenyl)ethane, tris(4-hydroxyphenyl)propane, tris(4-hydroxyphenyl)butane, tris(3-methyl-4-hydroxyphenyl)methane, tris(3,5-dimethyl-4-hydroxyphenyl)methane, tetrakis(4-hydroxyphenyl)ethane, tetrakis(3,5-dimethyl-4-hydroxyphenyl)ethane, bis(4-hydroxyphenyl)-phenylphosphine oxide, dicyclopentadienylbis(2,6-dimethyl phenol), dicyclopentadienyl bis(2-methylphenol), dicyclopentadienyl bisphenol, or the like.

The crosslinking agents, which also include auxiliary crosslinking agents, are not particularly limited. The crosslinking agents can be used alone or in combinations of two or more different crosslinking agents. Exemplary crosslinking agents and auxiliary crosslinking agents include oligomers or polymers with curable vinyl functionality. Such materials include oligomers and polymers having crosslinkable unsaturation. Examples include styrene butadiene rubber (SBR), butadiene rubber (BR), and nitrile butadiene rubber (NBR) having unsaturated bonding based on butadiene; natural rubber (NR), isoprene rubber (IR), chloroprene rubber (CR), butyl rubber (IIR), and halogenated butyl rubber having unsaturated bonding based on isoprene; ethylene-α-olefin copolymer elastomers having unsaturated bonding based on dicyclopentadiene (DCPD), ethylidene norbornene (ENB), or 1,4-dihexadiene (1,4-HD) (e.g., ethylene-α-olefin copolymers obtained by copolymerizing ethylene, an α-olefin, and a diene, such as ethylene-propylene-diene terpolymer (EPDM) and ethylene-butene-diene terpolymer (EBDM)). Examples also include hydrogenated nitrile rubber, fluorocarbon rubbers such as vinylidenefluoride-hexafluoropropene copolymer and vinylidenefluoride-pentafluoropropene copolymer, epichlorohydrin homopolymer (CO), copolymer rubber (ECO) prepared from epichlorohydrin and ethylene oxide, epichlorohydrin allyl glycidyl copolymer, propylene oxide allyl glycidyl ether copolymer, propylene oxide epichlorohydrin allyl glycidyl ether terpolymer, acrylic rubber (ACM), urethane rubber (U), silicone rubber (Q), chlorosulfonated polyethylene rubber (CSM), polysulfide rubber (T) and ethylene acrylic rubber. Further examples include various liquid rubbers, for example several types of liquid butadiene rubbers, and the liquid atactic butadiene rubber that is butadiene polymer with 1,2-vinyl connection prepared by anionic living polymerization. It is also possible to use liquid styrene butadiene rubber, liquid nitrile butadiene rubber (CTBN, VTBN, ATBN, etc. by Ube Industries, Ltd.), liquid chloroprene rubber, liquid polyisoprene, dicyclopentadiene type hydrocarbon polymer, and polynorbornene (for example, as sold by Elf Atochem).

Polybutadiene resins containing elevated levels of 1,2 addition are desirable for thermosetting matrices. Examples include the functionalized polybutadienes and poly(butadienestyrene) random copolymers sold by Ricon Resins, Inc. under the trade names RICON, RICACRYL, and RICOBOND resins. These include butadienes containing both low vinyl content such as RICON 130, 131, 134, 142; polybutadienes containing high vinyl content such as RICON 150, 152, 153, 154, 156, 157, and P30D; random copolymers of styrene and butadiene including RICON 100, 181, 184, and maleic anhydride grafted polybutadienes and the alcohol condensates derived therefrom such as RICON 130MA8, RICON MA13, RICON 130MA20, RICON 131MAS, RICON 131MA10, RICON MA17, RICON MA20, RICON 184MA6 and RICON 156MA17. Also included are polybutadienes that can be used to improve adhesion including RICOBOND 1031, RICOBOND 1731, RICOBOND 2031, RICACRYL 3500, RICOBOND 1756, RICACRYL 3500; the polybutadienes RICON 104 (25% polybutadiene in heptane), RICON 257 (35% polybutadiene in styrene), and RICON 257 (35% polybutadiene in styrene); (meth)acrylic functionalized polybutadienes such as polybutadiene diacrylates and polybutadiene dimethacrylates. These materials are sold under the tradenames RICACRYL 3100, RICACRYL 3500, and RICACRYL 3801. Also are included are powder dispersions of functional polybutadiene derivatives including, for example, RICON 150D, 152D, 153D, 154D, P30D, RICOBOND 0 1731 HS, and RICOBOND 1756HS. Further butadiene resins include poly(butadiene-isoprene) block and random copolymers, such as those with molecular weights from 3,000 to 50,000 g/mol and polybutadiene homopolymers having molecular weights from 3,000 to 50,000 g/mol. Also included are polybutadiene, polyisoprene, and polybutadiene-isoprene copolymers functionalized with maleic anhydride functions, 2-hydroxyethylmaleic functions, or hydroxylated functionality.

Further examples of oligomers and polymers with curable vinyl functionality include unsaturated polyester resins based on maleic anhydride, fumaric acid, itaconic acid and citraconic acid; unsaturated epoxy (meth)acrylate resins containing acryloyl groups, or methacryloyl group; unsaturated epoxy resins containing vinyl or allyl groups, urethane (meth)acrylate resin, polyether (meth)acrylate resin, polyalcohol (meth)acrylate resins, alkyd acrylate resin, polyester acrylate resin, spiroacetal acrylate resin, diallyl phthalate resin, diallyl tetrabromophthalate resin, diethyleneglycol bisallylcarbonate resin, and polyethylene polythiol resins. For example, the crosslinking agent. Other exemplary crosslinking agents further include polyfunctional crosslinking monomers such as (meth)acrylate monomers having two or more (meth)acrylate moieties per monomer molecule. Exemplary polyfunctional monomers include di(meth)acrylates such as 1,6-hexanediol di(meth)acrylate, 1,4-cyclohexanediol di(meth)acrylate, tripropylene glycol di(meth)acrylate, neopentyl glycol di(meth)acrylate, neopentyl glycol propoxylate di(meth)acrylate, neopentyl glycol ethoxylate di(meth)acrylate, neopentyl glycol propoxylate di(meth)acrylate, neopentyl glycol ethoxylate di(meth)acrylate, polyethylene glycol di(meth)acrylate, glycerol di(meth)acrylate, or the like; tri(meth)acrylates such as trimethylolpropane tri(meth)acrylate, 1,2,4- butanetriol tri(meth)acrylate, trimethylolpropane ethoxylate tri(meth)acrylate, or the like; tri(meth)allyls such as tri(meth)allyl cyanurate, tri(meth)allyl isocyanurate, tri(meth)allyl esters of citric acid, tri(meth)allyl esters of phosphoric acid, pentaerythritol tri(meth)acrylate, tris(hydroxyethyl)isocyanurate tri(meth)acrylate, or the like; tetra(meth)acrylates such as pentaerythritol tetra(meth)acrylate or the like; penta(meth)acrylates such as dipentaerythritol penta(meth)acrylate, or the like; hexa(meth)acrylates such as dipentaerythritol hexa(meth)acrylate, sorbitol hexa(meth)acrylate, or the like; glycidyl compounds such as glycidyl (meth)acrylate, (meth)allyl glycidyl ether, 1-chloro-2,3-epoxypropyl (meth)acrylate, 2-bromo-3,4-epoxybutyl (meth)acrylate, 2-(epoxyethyloxy)-ethyl (meth)acrylate, 2-(3,4-epoxybutyloxy)-ethyl (meth)acrylate, or the like; polythiol compounds such as trimethylolpropane tris(mercaptopropionate), pentaerythritol tetrakis(3-mercaptopropionate), or the like; silanes such as tetramethoxysilane, tetraethoxysilane, tetrapropoxysilane, tetra-n-butoxysilane, vinyltris(methylethyloximino)silane, vinyltris-(acetoxime)silane, methyltris(methylethyloximino)silane, methyltris(acetoxime)silane, vinyltrimethoxysilane, methyltrimethoxysilane, vinyltris(isopropenoxy)silane, tetraacetoxy-silane, methyltriacetoxysilane, ethyltriacetoxysilane, vinyltriacetoxysilane, di-t-butoxy-diacetoxysilane, methyltris(ethyl lactate)silane, vinyltris(ethyl lactate)silane, or the like; carbodiimides such as N-(3-dimethylaminopropyl)-N'-ethylcarbodiimide hydrochloride, dicyclohexylcarbodiimide, or the like; or a combination thereof. The curable thermosetting composition can optionally include a crosslinking catalyst, such as a carboxylic acid salt.

When the curable thermosetting composition includes a crosslinking agent, the crosslinking agent can be included in an amount of 1 to 60 wt%, or 5 to 45 wt%, or 10 to 30 wt%, based on total weight of the curable thermosetting composition.

The curable thermosetting composition can include one or more curing agents. As used herein, the term "curing agent" includes compounds that are variously described as curing agents, hardeners, or the like, or as both.

Exemplary curing agents and hardeners include amines, alcohols, phenols, carboxylic acids, acid anhydrides, and the like. For example, phenolic hardeners include novolac type phenol resins, resole type phenol resins, cresol novolac resins, aralkyl type phenol resins, phenol aralkyl resins, cresol aralkyl resins, naphthol aralkyl resins, dicyclopentadiene type phenol resins, terpene modified phenol resins, biphenyl type phenol resins, biphenyl-modified phenol aralkyl resins, bisphenols, triphenylmethane type phenol resins, tetraphenylol ethane resins, naphthol novolac resins, naphthol-phenol co-condensed novolac resins, naphthol-cresol co-condensed novolac resins, amino triazine modified phenol resins, or a combination thereof. Examples of the anhydride hardeners include methylhexahydrophthalic anhydride (MHHPA), methyltetrahydrophthalic anhydride, styrene-maleic anhydride copolymers (SMA), and olefin-maleic anhydride copolymers such as maleic anhydride grafted polyethylene, maleic anhydride grafted polypropylene, or a combination thereof. Other curing agents and hardeners include compounds such as dicyandiamides, polyamides, amidoamines, phenalkamines, Mannich bases, anhydrides, phenol-formaldehyde resins, amine-formaldehyde resins, phenol-formaldehyde resins, carboxylic acid functional polyesters, polysulfides, polymercaptans, isocyanates, cyanate ester compounds, or any combination thereof. Other exemplary curing agents include tertiary amines, Lewis acids, and oligomers or polymers with unsaturation.

When the curable thermosetting composition includes a curing agent, the curing agent can be included in an amount of 0.01 to 50 wt%, or 0.1 to 30 wt%, or 0.1 to 20 wt%, based on total weight of the curable thermosetting composition.

The curable thermosetting composition can include a curing catalyst. As used herein, the term "curing catalyst" includes compounds that are variously described as curing accelerators, curing promoters, curing catalysts, and curing co-catalysts.

Exemplary curing accelerators include heterocyclic accelerators such as a substituted or unsubstituted C₃₋₆ heterocycle comprising 1 to 4 ring heteroatoms, wherein each heteroatom is independently the same or different, and is nitrogen, oxygen, phosphorus, silicon, or sulfur. Heterocyclic accelerators include benzotriazoles; triazines; piperazines such as aminoethylpiperazine, N-(3-aminopropyl)piperazine, or the like; imidazoles such as 1-methylimidazole, 2-methylimidazole, 3-methyl imidazole, 4-methylimidazole, 5-methylimidazole, 1-ethylimidazole, 2-ethylimidazole, 3-ethylimidazole, 4-ethylimidazole, 5-ethylimidazole, 1-n-propylimidazole, 2-n-propylimidazole, 1-isopropylimidazole, 2-isopropylimidazole, 1-n-butylimidazole, 2-n-butylimidazole, 1-isobutylimidazole, 2-isobutylimidazole, 2-undecyl-1H-imidazole, 2-heptadecyl-1H-imidazole, 1,2-dimethylimidazole, 1,3-dimethylimidazole, 2,4-dimethylimidazole, 2-ethyl-4-methylimidazole, 1-phenylimidazole, 2-phenyl-1H-imidazole, 4-methyl-2-phenyl-1H-imidazole, 2-phenyl-4-methylimidazole, 1-benzyl-2-methylimidazole, 1-benzyl-2-phenylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 2-phenyl-4,5-dihydroxymethylimidazole, 2-phenyl-4-methyl-5-hydroxymethylimidazole, 1-cyanoethyl-2-phenyl-4,5-di(2-cyanoethoxy)methylimidazole; cyclic amidine such as 4-diazabicyclo(2,2,2)octane, diazabicycloundecene, 2-phenyl imidazoline, or the like; N,N-dimethylaminopyridine; a sulfamidate; or a combination thereof.

Amine curing accelerators include isophoronediamine, triethylenetetraamine, diethylenetriamine, 1,2- and 1,3-diaminopropane, 2,2-dimethylpropylenediamine, 1,4-diaminobutane, 1,6-diaminohexane, 1,7-diaminoheptane, 1,8-diaminooctane, 1,9-diaminononane, 1,12-diaminododecane, 4-azaheptamethylenediamine, N,N'-bis(3-aminopropyl)butane-1,4-diamine, dicyanamide, diamide diphenylmethane, diamide diphenylsulfonic acid (amine adduct), 4,4'-methylenedianiline, diethyltoluenediamine, m-phenylenediamine, p-phenylenediamine, melamine formaldehyde resins, urea formaldehyde resins, tetraethylenepentamine, 3-diethylaminopropylamine, 3,3'-iminobispropylamine, 2,4-bis(p-aminobenzyl)aniline, tetraethylenepentamine, 3-diethylaminopropylamine, 2,2,4- and 2,4,4-trimethylhexamethylenediamine, 1,2- and 1,3-diaminocyclohexane, 1,4-diamino-3,6-diethylcyclohexane, 1,2-diamino-4-ethylcyclohexane, 1,4-diamino-3,6-diethylcyclohexane, 1-cyclohexyl-3,4-diminocyclohexane, 4,4'-diaminondicyclohexylmethane, 4,4'-diaminodicyclohexylpropane, 2,2-bis(4-aminocyclohexyl)propane, 3,3'-dimethyl-4,4'-diaminodicyclohexylmethane, 3-amino-1-cyclohexaneaminopropane, 1,3- and 1,4-bis(aminomethyl)cyclohexane, m- and p-xylylenediamine, or diethyl toluene diamines; or a tertiary amine hardening accelerator such as triethylamine, tributylamine, dimethylaniline, diethylaniline, benzyldimethylamine (BDMA), α-methylbenzyldimethylamine, N,N-dimethyl amino pyridine, *N,N*-dimethylaminoethanol, *N,N*-dimethylaminocresol, or tri(*N,N-*dimethylaminomethyl)phenol; or a combination thereof.

The curing accelerator can be a latent cationic cure catalyst including, for example, diaryliodonium salts, phosphonic acid esters, sulfonic acid esters, carboxylic acid esters, phosphonic ylides, triarylsulfonium salts, benzylsulfonium salts, aryldiazonium salts, benzylpyridinium salts, benzylammonium salts, isoxazolium salts, or the like, or a combination thereof. The diaryliodonium salt can have the structure [(R¹⁰)(R¹¹)I]⁺ X⁻, wherein R¹⁰ and R¹¹ are each independently a C₆₋₁₄ monovalent aromatic hydrocarbon radical, optionally substituted with from 1 to 4 monovalent radicals selected from C₁₋₂₀ alkyl, C₁₋₂₀ alkoxy, nitro, and chloro; and wherein X- is an anion. The additional cure accelerator can have the structure [(R¹⁰)(R¹¹)I]⁺ SbF₆⁻ , wherein R¹⁰ and R¹¹ are each independently a C₆₋₁₄ monovalent aromatic hydrocarbon, optionally substituted with from 1 to 4 C₁₋₂₀ alkyl, C₁₋₂₀ alkoxy, nitro, or chloro; for example, 4-octyloxyphenyl phenyl iodonium hexafluoroantimonate.

The curing accelerator can be a metal salt complex, such as a copper (II) aluminum (III), zinc, cobalt, tin salt of an aliphatic or aromatic carboxylic acid selected from copper (II), tin (II), and aluminum (III) salts of acetate, stearate, gluconate, citrate, benzoate, and mixtures thereof. For example, the cure accelerator can be a copper (II) or aluminum (III) salts of β-diketonates; copper (II), iron (II), iron (III), cobalt (II), cobalt (III), or aluminum (III) salts of acetylacetonates; zinc (II), chromium (II), or manganese (II) salts of octoates; or a combination thereof.

When the curable thermosetting composition includes a curing catalyst, the curing catalyst can be included in an amount of 0.01 to 5 wt%, or 0.05 to 5 wt%, or 0.1 to 5 wt%, based on total weight of the curable thermosetting composition.

The curable thermosetting composition can optionally include a curing initiator, such as a peroxide compound. Exemplary peroxide curing initiators can include benzoyl peroxide, dicumyl peroxide, methyl ethyl ketone peroxide, lauryl peroxide, cyclohexanone peroxide, t-butyl hydroperoxide, t-butyl benzene hydroperoxide, t-butyl peroctoate, t-butylperoxybenzoate, t-butylperoxy 2-ethylhexyl carbonate, 2,4-dichlorobenzoyl peroxide, 2,5-dimethylhexane-2,5-dihydroperoxide, butyl-4,4-bis(tert-butyldioxy)valerate, 2,5-dimethyl-2,5-di(t-butylperoxy)-hex-3-yne, di-t-butylperoxide, t-butylcumyl peroxide, α,α'-bis(t-butylperoxy-m-isopropyl)benzene, 2,5-dimethyl-2,5-di(t-butylperoxy)hexane, dicumylperoxide, di(t-butylperoxy isophthalate, t-butylperoxybenzoate, 2,2-bis(t-butylperoxy)butane, 2,2-bis(t-butylperoxy)octane, 2,5-dimethyl-2,5-di(benzoylperoxy)hexane, 1,1-di-(tert-butylperoxy)-3,3,5-trimethylcyclohexane, di(trimethylsilyl)peroxide, trimethylsilylphenyltriphenylsilyl peroxide, or the like, or a combination thereof.

When the curable thermosetting composition includes a curing initiator, the curing initiator can be included in an amount of 0.1 to 5 wt%, or 0.5 to 5 wt%, or 1 to 5 wt%, based on total weight of the curable thermosetting composition.

Flame retardants include, for example, organic compounds that comprise phosphorus, bromine, or chlorine. Non-brominated and non-chlorinated phosphorus-containing flame retardants can be preferred in certain applications for regulatory reasons, for example organic phosphates and organic compounds containing phosphorus-nitrogen bonds.

Examples of phosphorous flame retardants include phosphates, phosphazenes, phosphite esters, phosphines, phosphinates, polyphosphates, and phosphonium salts. Phosphates include triphenyl phosphate, tricresyl phosphate, isopropylated triphenyl phosphate, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, xylenyl-diphenyl phosphate; cresyl-diphenyl phosphate; 1,3-phenylenebis(di-2,6-xylenyl phosphate); 9,10-dihydro-9-oxa-10-phosphaphenanthrene-10-oxide (DOPO), tetraphenyl diphosphate (RDP), condensed phosphate compounds such as aromatic condensed phosphate compounds; and cyclic phosphate compounds, bis(diphenyl) phosphate of hydroquinone, bis(diphenyl) phosphate of bisphenol A, or the like, or their oligomeric or polymeric counterparts, or a combination thereof.

Examples of the phosphazene compounds include cyclic and chain phosphazene compounds. The cyclic phosphazene compounds (cyclophosphazenes) have a cyclic structure in which phosphorus-nitrogen double bonds are present in the molecule. Examples of phosphinate compounds include aluminum dialkylphosphinate, aluminum tris-(diethylphosphinate), aluminum tris-(methylethylphosphinate), aluminum tris-(diphenylphosphinate), zinc bis-(diethylphosphinate), zinc bis-(methylphosphinate), zinc bis-(diphenylphosphinate), titanyl bis-(diethylphosphinate), titanyl bis-(methylethylphosphinate), and titanyl bis-(diphenylphosphinate). Examples of polyphosphate compounds include melamine polyphosphate, melam polyphosphate, and melem polyphosphate. Examples of phosphonium salt compounds include tetraphenylphosphonium tetraphenylborate. Examples of the phosphite ester compounds include trimethylphosphite and triethylphosphite. Flame retardant compounds containing phosphorus-nitrogen bonds include phosphonitrilic chloride, phosphorus ester amides, phosphoric acid amides, phosphonic acid amides, phosphinic acid amides, and tris(aziridinyl) phosphine oxide.

Halogenated materials can also be used as flame retardants, for example bisphenols such as 2,2-bis-(3,5-dichlorophenyl)-propane; bis-(2-chlorophenyl)-methane; bis(2,6-dibromophenyl)-methane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; and 2,2-bis-(3,5-dichloro-4-hydroxyphenyl)-propane 2,2 bis-(3-bromo-4-hydroxyphenyl)-propane. Other halogenated materials include 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromobiphenyl ether, decabromodiphenylethane, as well as oligomeric and polymeric halogenated aromatic compounds, such as brominated styrene, 4,4-dibromobiphenyl, ethylene-bis(tetrabromophthalimide), or a copolycarbonate of bisphenol A and tetrabromobisphenol A and a carbonate precursor, e.g., phosgene. Metal synergists, e.g., antimony oxide, can also be used with the flame retardant.

Inorganic flame retardants can also be used, for example salts of C₁₋₁₆ alkyl sulfonate salts such as potassium perfluorobutane sulfonate (Rimar salt), potassium perfluoroctane sulfonate, tetraethylammonium perfluorohexane sulfonate, and potassium diphenylsulfone sulfonate; salts such as Na₂CO₃, K₂CO₃, MgCO₃, CaCO₃, and BaCO₃, or fluoro-anion complexes such as Li₃AlF₆, BaSiF₆, KBF₄, K₃AlF₆, KAlF₄, K₂SiF₆, or Na₃AlF₆.

When the curable thermosetting composition includes a flame retardant, the flame retardant can be included in an amount of greater than 1 wt%, or 1 to 20 wt%, or 5 to 20 wt%, based on total weight of the curable thermosetting composition.

The curable thermosetting composition can further include inorganic or organic fillers, such as a particulate filler, a fibrous filler, or the like, or a combination thereof. Any inorganic and organic fillers, including those known in the art, can be used without limitation.

Exemplary fillers include, for example, clay, talc, kaolin, wollastonite, mica, calcium carbonate, magnesium carbonate; alumina, thiourea, glass powder, B- or Sn-based fillers such as zinc borate, zinc stannate and zinc hydroxystannate; metal oxides such as zinc oxide and tin oxide. alumina, silica (including fused silica, fumed silica, spherical silica, and crystalline silica), boron nitride (including spherical boron nitride), aluminum nitride, silicon nitride, magnesia, magnesium silicate, antimony trioxide, glass fibers (chopped, milled, or cloth), glass mat, glass bubbles, hollow glass microspheres, aramid fibers, quartz, or the like, or a combination thereof. Other exemplary inorganic fillers include powdered titanium ceramics such as any one of the titanates of barium. lead, strontium, calcium, bismuth, magnesium, or the like. Inorganic fillers also include hydrates such as aluminum hydroxide, magnesium hydroxide, zeolite, and hydrotalcite. In some aspects, the filler can be treated with a coupling agent as disclosed herein.

Glass fibers include those based on E, A, C, ECR, R, S, D, and NE glasses, as well as quartz. The glass fiber can have any suitable diameter, such as from 2 to 30 micrometers (µm), or 5 to 25 µm, or 5 to 15 µm. The length of the glass fibers before compounding are not limited and can be 2 to 7 millimeters (mm), or 1.5 to 5 mm. Alternatively, longer glass fibers or continuous glass fibers can be used. Suitable glass fiber is commercially available from suppliers such as Owens Corning, Nippon Electric Glass, PPG, and Johns Manville.

The organic filler can be, for example, polytetrafluoroethylene powder, polyphenylene sulfide powder, and poly(ether sulfones) powder, poly(phenylene ether) powder, polystyrene, divinylbenzene resin, or the like, or a combination thereof.

The filler can be selected based on the thermal expansion coefficient (CTE) and thermal conductivity requirements. For example, Al₂O₃, BN, AlN, or a combination thereof, can be used for an electronics module with high thermal conductivity. For example, MgO can be used for increased thermal conductivity and increased CTE. For example, SiO₂ (e.g., amorphous SiO₂) can be used for a lightweight module having a low CTE and a small dielectric constant.

When the curable thermosetting composition includes a filler, the filler can be included in an amount of greater than 1 wt%, or 1 to 50 wt%, or 1 to 30 wt%, or 10 to 30 wt%, based on total weight of the curable thermosetting composition.

Coupling agents, also referred to as adhesion promoters, include chromium complexes, silanes, titanates, zircon-aluminates, olefin-maleic anhydride copolymers, reactive cellulose esters, and the like. Exemplary olefin-maleic anhydride copolymers can include maleic anhydride grafted polyethylene, maleic anhydride grafted polypropylene, or a combination thereof. Exemplary silanes can include epoxysilane compound, aminosilane compounds methacryloxysilane compounds, vinylsilane compounds, or a combination thereof.

Examples of aminosilane coupling agents are y -aminopropyltrimethoxy-silane, γ-aminopropyltriethoxysilane, N-beta(aminoethyl) γ-aminopropylmethyl-dimethoxysilane, N-beta(aminoethyl) y -aminopropyltrimethoxysilane, and N-beta(aminoethyl)γ-aminopropyltriethoxysilane. Illustrative epoxysilane coupling agents include y - glycidoxypropylmethyldiethoxysilane, gamma-glycidoxypropyltrimethoxysilane, and γ-glycidoxypropyltriethoxysilane. Examples of methacryloxysilane coupling agents include γ-methacryloxypropylmethyldimethoxysilane, y -methacryloxypropyl-trimethoxysilane, γ-methacryloxypropyldiethoxysilane, and γ-methacryl oxypropyltri ethoxy sil ane.

Other exemplary silane coupling agents include bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl) tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzolyl tetrasulfide, 3-triethoxysilylpropyl methacrylate monosulfide, 3-trimethoxysilylpropyl methacrylate monosulfide, bis(3-diethoxymethylsilylpropyl) tetrasulfide, 3-mercaptopropyldimethoxymethylsilane, dimethoxymethylsilylpropyl-N,N-dimethylthio-carbamoyl tetrasulfide, dimethoxymethylsilylpropylbenzothiazolyl tetrasulfide, or the like, or a combination thereof. The silane coupling agent can be a polysulfide silane coupling agent having 2 to 4 sulfur atoms forming a polysulfide bridge. For example, the coupling agent can be a bis(3-triethoxysilylpropyl) di-, tri-, or tetrasulfide.

When the curable thermosetting composition includes a coupling agent, the coupling agent can be included in an amount of 0.01 to 5 wt%, or 0.05 to 5 wt%, or 0.1 to 5 wt%, based on total weight of the curable thermosetting composition.

The curable thermosetting composition can optionally include a solvent. The solvent can be, for example, a C₃₋₈ ketone, a C₃₋₈ *N*,*N*-dialkylamide, a C₄₋₁₆ dialkyl ether, a C₆₋₁₂ aromatic hydrocarbon, a C₁₋₃ chlorinated hydrocarbon, a C₃₋₆ alkyl alkanoate, a C₂₋₆ alkyl cyanide, or a combination thereof. Specific ketone solvents include, for example, acetone, methyl ethyl ketone, methyl isobutyl ketone, or a combination thereof. Specific C₄₋₈ *N,N-*dialkylamide solvents include, for example, dimethylformamide, dimethylacetamide, *N*-methyl-2-pyrrolidone, or a combination thereof. Specific dialkyl ether solvents include, for example, tetrahydrofuran, ethylene glycol monomethylether, dioxane, or a combination thereof. Specific aromatic hydrocarbon solvents include, for example, benzene, toluene, xylenes, styrene, divinylbenzenes, or a combination thereof. The aromatic hydrocarbon solvent can be non-halogenated. Specific C₃₋₆ alkyl alkanoates include, for example, methyl acetate, ethyl acetate, methyl propionate, ethyl propionate, or a combination thereof. Specific C₂₋₆ alkyl cyanides include, for example, acetonitrile, propionitrile, butyronitrile, or a combination thereof. Specific C₂₋₆ alkyl cyanides include, for example, acetonitrile, propionitrile, butyronitrile, or a combination thereof. For example, the solvent can be N,N-dimethylformamide, N,N-dimethylacetamide, N,N-diethylacetamide, N,N-dimethylmethoxyacetamide, N-methyl-2-pyrrolidone, N-cyclohexylpyrrolidinone, N-methylcaprolactam, 1,3-dimethyl-2-imidazolidone, 1,2-dimethoxyethane, 1,3-dioxane, 1,4-dioxane, tetrahydrofuran, γ-butyrolactone, γ-caprolactone, dimethylsulfoxide, benzophenone, methyl ethyl ketone, methyl isobutyl ketone, cyclohexanone, diglyme, triglyme, tetraglyme, N,N-dimethylethyleneurea, N,N-dimethylpropyleneurea, tetramethylurea, propylene glycol phenyl ether, anisole, veratrole, o-dichlorobenzene, chlorobenzene, trichloroethane, methylene chloride, chloroform, pyridine, picoline, ethyl lactate, n-butyl acetate, butyl cellosolve acetate, butyl carbitol acetate, ethyl cellosolve acetate, ethyl carbitol acetate, propylene carbonate, sulfolane, an ionic liquid, or a combination thereof.

When a solvent is utilized, the curable thermosetting composition can include 2 to 99 wt% of the solvent, based on weight total of the curable thermosetting composition. For example, the solvent amount can be 5 to 80 wt%, or 10 to 60 wt%, or 20 to 50 wt%, based on weight total of the curable thermosetting composition. The solvent can be chosen, in part, to adjust the viscosity of the curable thermosetting composition. Thus, the solvent amount can depend on variables including the type and amount of capped poly(arylene ether) copolymer, the type and amount of other components such as curing additive, the type and amount of any auxiliary thermosetting resin(s), and the processing temperature used for any subsequent processing of the curable thermosetting composition, for example, impregnation of a reinforcing structure with the curable thermosetting composition for the preparation of a composite. The solvent can be anhydrous. For example, the solvent can include less than 100 parts per million (ppm), or less than 50 ppm, or less than 10 ppm of water based on total weight of the solvent.

The curable thermosetting composition can further include a curable unsaturated monomer composition, which can include, for example, a monofunctional styrenic compound (e.g., styrene), a monofunctional (meth)acrylic compound, or the like, or a combination thereof. For example, the curable unsaturated monomer composition can be an alkene-containing monomer or an alkyne-containing monomer. Exemplary alkene- and alkyne-containing monomers includes those described in U.S. Patent No. 6,627,704 to Yeager et al., and include (meth)acrylates, (meth)acrylamides, N-vinylpyrrolidone, and vinylazalactones as disclosed in U.S. Pat. No. 4,304,705 of Heilman et al. Exemplary monofunctional monomers include mono(meth)acrylates, such as methyl (meth)acrylate, ethyl (meth)acrylate, isopropyl (meth)acrylate, isooctyl (meth)acrylate, isobornyl (meth)acrylate, (meth)acrylic acid, n-hexyl (meth)acrylate, tetrahydrofurfuryl (meth)acrylate, N-vinylcaprolactam, N-vinylpyrrolidone, (meth)acrylonitrile, or the like, or a combination thereof.

The curable thermosetting composition can, optionally, further include one or more additional additives. Additional additives include, for example, dyes, pigments, colorants, antioxidants, heat stabilizers, light stabilizers, plasticizers, defoaming agents, lubricants, dispersants, flow modifiers, drip retardants, antiblocking agents, antistatic agents, flow-promoting agents, processing aids, substrate adhesion agents, mold release agents, toughening agents, low-profile additives, stress-relief additives, or the like, or a combination thereof. When present, the additional additives can be included in any effective amount, for example in an amount of 0.01 to 20 wt%, or 0.01 to 10 wt%, or 0.01 to 5 wt%, or 0.01 to 1 wt%, based on the total weight of the curable thermosetting composition.

The curable thermosetting composition can be prepared by combining the capped poly(arylene ether) copolymer and the other optional components disclosed herein using any suitable method.

Also provided is a cured thermoset composition comprising a cured product of the curable thermosetting composition. There is no particular limitation on the method by which the curable thermosetting composition can be cured. The curable composition can, for example, be cured thermally or by using irradiation techniques, including UV irradiation or electron beam irradiation. For example, a cured product can be obtained by heating the curable thermosetting composition defined herein for a time and temperature sufficient to evaporate the solvent and effect curing. When heat curing is used, the temperature can be 30 to 400°C, or 50 to 250°C, or 100 to 250°C. The heating can be for 1 minute to 24 hours, or 1 minute to 6 hours, or 3 hours to 5 hours. The curing can be staged to produce a partially cured and often tack-free resin, which then is fully cured by heating for longer periods or temperatures within the aforementioned ranges. As used herein, the term "cured" encompasses products that are partially cured or fully cured.

The cured thermoset composition can achieve one or more desirable properties such as improved viscosity, coefficient of thermal expansion (CTE), dissipation factor, equilibrium water absorption, or the like, or a combination thereof.

The disclosed curable thermosetting compositions and cured compositions can be used in a variety of applications and uses, including any applications where conventional thermosetting compositions are used. For example, useful articles including the curable thermosetting composition or the cured thermoset composition can be in the form of a composite, a foam, a fiber, a layer, a coating, an encapsulant, an adhesive, a sealant, a molded component, a prepreg, a casing, a laminate, a metal clad laminate, an electronic composite, a structural composite, or a combination thereof. Exemplary uses and applications include coatings such as protective coatings, sealants, weather resistant coatings, scratch resistant coatings, and electrical insulative coatings; adhesives; binders; glues; composite materials such as those using carbon fiber and fiberglass reinforcements. When utilized as a coating, the disclosed compounds and compositions can be deposited on a surface of a variety of underlying substrates. For example, the compositions can be deposited on a surface of metals, plastics, glass, fiber sizings, ceramics, stone, wood, or any combination thereof. The disclosed compositions can be used as a coating on a surface of a metal container (e.g., aluminum or steel), such as those commonly used for packaging and containment in the paint and surface covering industries. The curable thermosetting composition and the cured thermoset composition derived therefrom can also be particularly well suited for use in forming electrical components and computer components.

Methods of forming a composite can include impregnating a reinforcing structure with a curable thermosetting composition; partially curing the curable thermosetting composition to form a prepreg; and laminating a plurality of prepregs. The reinforcing structure can be a porous base material such as a fibrous preform or substrate, or other porous material comprising a ceramic, a polymer, a glass, carbon, or a combination thereof. For example, the porous base material can be woven or non-woven glass fabric, a fiberglass fabric, or carbon fiber. When the article includes a fibrous preform, the method of manufacturing the article can include forming the article from the curable thermosetting composition by coating or impregnating the preform with the curable composition. The impregnated fibrous preform can optionally be shaped before or after removing the solvent. In some aspects, the curable thermosetting composition layer can further comprise a woven or nonwoven glass fabric. For example, the curable layer can be prepared by impregnating the glass fabric with a curable composition and removing the solvent from the impregnated glass fabric. Exemplary reinforcing structures are described, for example, in Anonymous (Hexcel Corporation), "Prepreg Technology", March 2005, Publication No. FGU 017b; Anonymous (Hexcel Corporation), "Advanced Fibre Reinforced Matrix Products for Direct Processes", June 2005, Publication No. ITA 272; and Bob Griffiths, "Farnborough Airshow Report 2006", CompositesWorld.com, September 2006. The weight and thickness of the reinforcing structure are chosen according to the intended use of the composite using criteria well known to those skilled in the production of fiber reinforced resin composites. The reinforced structure can contain various finishes suitable for the thermosetting components of the curable thermosetting composition.

The method of manufacturing the articles from the curable thermosetting composition can include partially curing the curable thermosetting composition to form a prepreg, or fully curing the curable thermosetting composition to form a composite article. References herein to properties of the "cured composition" refer to a composition that is substantially fully cured. For example, the resin in a laminate formed from prepregs is typically substantially fully cured. One skilled in the thermoset arts can determine whether a sample is partially cured or substantially fully cured without undue experimentation. The curing can be before or after removing the solvent from the curable composition. In addition, the article can be further shaped before removal of the solvent or after removal of the solvent, before curing, after partial curing, or after full curing, for example by thermoforming. In an aspect, the article is formed, and the solvent is removed; the article is partially cured (B-staged); optionally shaped; and then further cured.

Commercial-scale methods of forming composites are known in the art, and the curable thermosetting compositions described herein are readily adaptable to existing processes and equipment. For example, prepregs are often produced on treaters. The main components of a treater include feeder rollers, a resin impregnation tank, a treater oven, and receiver rollers. The reinforcing structure (E-glass, for example) is usually rolled into a large spool. The spool is then put on the feeder rollers that turn and slowly roll out the reinforcing structure. The reinforcing structure then moves through the resin impregnation tank, which contains the curable thermosetting composition. The curable composition impregnates the reinforcing structure. After emerging from the tank, the coated reinforcing structure moves upward through the vertical treater oven, which is typically at a temperature of 175 to 200° C, and the solvent is evaporated. The resin begins to polymerize at this time. When the composite comes out of the tower it is sufficiently cured so that the web is not wet or tacky. The cure process, however, is stopped short of completion so that additional curing can occur when laminate is made. The web then rolls the prepreg onto a receiver roll.

Electrical and electronic articles including or derived from the curable thermosetting composition are also provided. Articles include those comprising printed circuits as used in medical or aerospace industries. Still other articles include antennae and like articles. Articles such as printed circuit boards are used, for example, in lighting, solar energy, displays, cameras, audio and video equipment, personal computers, mobile telephones, electronic notepads, and similar devices, or office automation equipment. For example, electrical parts can be mounted on printed circuit boards comprising a laminate. Other exemplary articles prepared from the curable composition for various applications can include copper clad laminates (CCL), for example, metal core copper clad laminates (MCCCL), composite articles, and coated articles, for example multilayer articles.

Dielectric layer can be prepared from the curable thermosetting composition can be useful in a circuit assembly, for example, in a metal-clad laminate such as a copper clad laminate. For example, a laminate can comprise a dielectric layer, a conductive metal circuit layer disposed on the dielectric layer, and optionally, a heat dissipating metal matrix layer disposed on the dielectric layer on a side opposite the conductive metal layer. The dielectric layer can optionally include a fibrous preform (e.g., a fabric layer). For example, the dielectric layer can further include a glass fabric layer.

The conductive metal layer can be in the form of a circuit, and can be copper, zinc, tin, brass, chromium, molybdenum, nickel, cobalt, aluminum, stainless steel, iron, gold, silver, platinum, titanium, or the like, or a combination thereof. Other metals include a copper molybdenum alloy, a nickel-cobalt iron alloy such as KOVAR, available from Carpenter Technology Corporation, a nickel-iron alloy such as INVAR, available from National Electronic Alloys, Inc., a bimetal, a trimetal, a trimetal derived from two-layers of copper and one layer of INVAR, and a trimetal derived from two layers of copper and one layer of molybdenum. Exemplary metal layers comprise copper or a copper alloy. Alternatively, wrought copper foils can be used. Conductive metal layers can have a thickness of 2 to 200 micrometers (µm), or 5 to 50 µm, or 5 to 40 µm.

A heat dissipating metal matrix layer can be a thermally conductive metal such as aluminum, boron nitride, aluminum nitride, copper, iron, steel, or the like, or a combination thereof. A thermally conductive, electrically conductive metal can be used provided that the metal is electrically isolated from the metal circuit layer. Preferred supporting metal matrix layers can have a thickness of 0.1 to 20 millimeters (mm), or 0.5 to 10 mm, or 0.8 to 2 mm.

The conductive metal layer and the supporting metal matrix layers can be pretreated to have high surface roughness for enhanced adhesion to the dielectric layer. Treatment methods include washing, flame treatment, plasma discharge, corona discharge, or the like, for example to enhance adhesion of the metal layer. The dielectric layer can adhere firmly to the conductive metal layer or the heat dissipation layer without using an adhesive, or an adhesive can be used to improve adhesion of the dielectric layer to the conductive metal layer or the heat dissipation layer. Exemplary adhesives used to bond the composite sheet to a metal include polyimide adhesives, acrylic adhesives, epoxies, or the like, or a combination thereof.

The copper clad laminates can be made by thermal lamination of one or more dielectric layers, one or more conductive metal layers, and a supporting metal matrix layer, under pressure without using thermosetting adhesives. The dielectric layer can be prepared from the curable thermosetting composition and can be prepared prior to the thermal lamination step by a solvent casting process to form a layer. For example, the dielectric layer, the conductive metal layer, and the thermal dissipation layer can be thermally laminated together by an adhesive-free process under pressure to form a laminate. The electrically conductive metal layer can optionally be in the form of a circuit before laminating, or the conductive metal layer can optionally be etched to form the electrical circuit following lamination. The laminating can be by hot press or roll calendaring methods, for example, a roll-to-roll method. The conductive metal layer in a copper clad laminate can further be patterned to provide a printed circuit board. Furthermore, the copper clad laminates can be shaped to provide a circuit board having the shape of a sheet, a tube, or a rod.

Alternatively, laminates for a circuit assembly can be made by a solution casting method in which the curable thermosetting composition is cast directly onto the electrically conductive metal layer, followed by lamination to the heat dissipating metal matrix layer. For example, the curable thermosetting composition can be cast directly onto the heat dissipating metal matrix layer, followed by lamination to the electrically conductive metal layer.

Multilayer laminates including additional layers can also be made by thermal lamination in one step or in two or more consecutive steps by such processes as hot press or roll calendaring methods. For example, seven layers or fewer can be present in the laminate, or sixteen layers or fewer. In an aspect, a laminate can be formed in one step or in two or more consecutive steps with sequential layers of fabric-thermoset-metal-thermoset-fabric-thermoset-metal foil or a sub-combination thereof with fewer layers, such that the laminate comprises a layer of thermoset film between any layer of metal foil and any layer of fabric. In another aspect, a first laminate can be formed in one step or in two or more consecutive steps with a layer of fabric between two layers of the thermoset, such as a layer of woven glass fabric between two layers of the thermoset. A second laminate can then be prepared by laminating a metal foil to a thermoset side of the first laminate.

Printed circuit boards prepared from the curable thermosetting composition can have an overall thickness of 0.1 to 20 mm, and specifically 0.5 to 10 mm, wherein overall thickness refers to an assembly comprising a layer each of the dielectric layer, the electrically conductive metal layer, and the supporting metal matrix layer. Circuit assemblies can have an overall thickness of 0.5 to 2 mm, and specifically 0.5 to 1.5. There is no particular limitation on the thickness of the dielectric layer and can be 5 to 1500 µm, or 5 to 750 µm, or 10 to 150 µm, or 10 to 100 µm. For example, the printed circuit board can be a metal core printed circuit board (MCPCB) for use in a light emitting diode (LED) application.

The curable thermosetting composition can be used as a coating, for example in the preparation of a multilayer article. A method of manufacturing the coating can include combining the curable thermosetting composition and optionally a fluoropolymer and forming a coating on a substrate. For example, a multilayer article can be manufactured by forming a layer including the curable thermosetting composition, removing the solvent from the layer and optionally curing to provide a primer layer, forming a second layer comprising a ceramic (e.g., Al₂O₃, TiO₂, ZrO₂, Cr₂O₃, SiO₂, MgO, BeO, Y₂O₃, Al₂O₃-SiO₂, MgO-ZrO₂, SiC, WC, B₄C, TiC, Si₃N₄, TiN, BN, AlN, TiB, ZrB₂, or the like), a thermoplastic polymer, a fluoropolymer (e.g., polytetrafluoroethylene, tetrafluoroethylene-perfluoroalkylvinylether copolymers, tetrafluoroethylene-hexafluoropropylene copolymers, polychlorotrifluoroethylene, tetrafluoroethylene-ethylene copolymers, polyvinylidene fluoride, or the like), or a combination thereof on the primer layer to provide the multilayer article, and optionally thermally treating the multilayer article to cure the curable thermosetting composition. In some aspects, the second layer can further include the curable thermosetting composition.

Additional applications for the curable thermosetting compositions include, for example, acid bath containers; neutralization tanks; aircraft components; bridge beams; bridge deckings; electrolytic cells; exhaust stacks; scrubbers; sporting equipment; stair cases; walkways; automobile exterior panels such as hoods and trunk lids; floor pans; air scoops; pipes and ducts, including heater ducts; industrial fans, fan housings, and blowers; industrial mixers; boat hulls and decks; marine terminal fenders; tiles and coatings; building panels; business machine housings; trays, including cable trays; concrete modifiers; dishwasher and refrigerator parts; electrical encapsulants; electrical panels; tanks, including electrorefining tanks, water softener tanks, fuel tanks, and various filament-wound tanks and tank linings; furniture; garage doors; gratings; protective body gear; luggage; outdoor motor vehicles; pressure tanks; optical waveguides; radomes; railings; railroad parts such as tank cars; hopper car covers; car doors; truck bed liners; satellite dishes; signs; solar energy panels; telephone switchgear housings; tractor parts; transformer covers; truck parts such as fenders, hoods, bodies, cabs, and beds; insulation for rotating machines including ground insulation, turn insulation, and phase separation insulation; commutators; core insulation and cords and lacing tape; drive shaft couplings; propeller blades; missile components; rocket motor cases; wing sections; sucker rods; fuselage sections; wing skins and flarings; engine narcelles; cargo doors; tennis racquets; golf club shafts; fishing rods; skis and ski poles; bicycle parts; transverse leaf springs; pumps, such as automotive smog pumps; electrical components, embedding, and tooling, such as electrical cable joints; wire windings and densely packed multi-element assemblies; sealing of electromechanical devices; battery cases; resistors; fuses and thermal cut-off devices; coatings for printed wiring boards; casting items such as capacitors, transformers, crankcase heaters; small molded electronic parts including coils, capacitors, resistors, and semiconductors; as a replacement for steel in chemical processing, pulp and paper, power generation, and wastewater treatment; scrubbing towers; pultruded parts for structural applications, including structural members, gratings, and safety rails; swimming pools, swimming pool slides, hot-tubs, and saunas; drive shafts for under the hood applications; dry toner resins for copying machines; marine tooling and composites; heat shields; submarine hulls; prototype generation; development of experimental models; laminated trim; drilling fixtures; bonding jigs; inspection fixtures; industrial metal forming dies; aircraft stretch block and hammer forms; vacuum molding tools; flooring, including flooring for production and assembly areas, clean rooms, machine shops, control rooms, laboratories, parking garages, freezers, coolers, and outdoor loading docks; electrically conductive compositions for antistatic applications; for decorative flooring; expansion joints for bridges; injectable mortars for patch and repair of cracks in structural concrete; grouting for tile; machinery rails; metal dowels; bolts and posts; repair of oil and fuel storage tanks, and numerous other applications.

Processes useful for preparing the articles and materials include those generally known to the art for the processing of thermosetting resins. Such processes have been described in the literature as in, for example, Engineered Materials Handbook, Volume 1, Composites, ASM International Metals Park, Ohio, copyright 1987 Cyril A. Dostal Senior Ed, pp. 105-168 and 497-533, and "Polyesters and Their Applications" by Bjorksten Research Laboratories, Johan Bjorksten (pres.) Henry Tovey (Ch. Lit. Ass.), Betty Harker (Ad. Ass.), James Henning (Ad. Ass.), Reinhold Publishing Corporation, New York, 1956. Processing techniques include resin transfer molding; sheet molding; bulk molding; pultrusion; injection molding, including reaction injection molding (RIM); atmospheric pressure molding (APM); casting, including centrifugal and static casting open mold casting; lamination including wet or dry lay up and spray lay up; also included are contact molding, including cylindrical contact molding; compression molding; including vacuum assisted resin transfer molding and chemically assisted resin transfer molding; matched tool molding; autoclave curing; thermal curing in air; vacuum bagging; pultrusion; Seeman's Composite Resin Infusion Manufacturing Processing (SCRIMP); open molding, continuous combination of resin and glass; and filament winding, including cylindrical filament winding. For example, an article can be prepared by a resin transfer molding process.

In an aspect, also provided is an article derived from the curable thermosetting composition, wherein the article is a composite, a foam, a fiber, a layer, a coating, an encapsulant, an adhesive, a sealant, a molded component, a prepreg, a casing, a cast article, a laminate, or a combination thereof; or, wherein the article is a metal clad laminate, an electronic composite, a structural composite, or a combination thereof. Articles can be manufactured as disclosed herein, for example by casting, molding, extruding, or the like, and removing the solvent from the formed article. In some aspects, the article can be a layer, and can be formed by casting the curable composition onto a substrate to form a cast layer. The solvent can be removed by any number of means, including by heating the cast layer, heating the cast layer under heat and pressure, for example by laminating the cast layer to another substrate. In some aspects, articles prepared by the above-described methods can include adhesives, packaging material, capacitor films, or circuit board layers. In some aspects, articles prepared from the curable composition can be a dielectric layer, or a coating disposed on a substrate, for example a wire or cable coating. For example, the article can be a dielectric layer in a circuit material, for example in a printed circuit board, used, for example, in lighting or communications applications. Other exemplary articles prepared from the curable composition can be one or more painted layers. The curable compositions can be used to prepare articles as disclosed herein for other curable thermosetting compositions.

This disclosure is further illustrated by the following examples, which are nonlimiting.

### EXAMPLES

Components used in the examples are summarized in Table 1.

**Table 1**

| Component | Description | CAS No. | Source |
|---|---|---|---|
| TMBPA | Tetramethyl bisphenol A | 5613-46-7 | Deepak Novachem |
| Cu₂O | Cuprous oxide | 1317-39-1 | American Chemet Corporation |
| HBr | Hydrobromic acid | 10035-10-6 | Chemtura Corporation |
| DBEDA | Di-tert-butylethylenediamine | 4062-60-6 | Achiewell LCC |
| DBA | Di-n-butylamine | 111-92-2 | Oxea Corporation |
| DMBA | N,N-Dimethylbutylamine | 927-62-8 | Oxea Corporation |
| MAQUAT | N,N,N'N'-Didecyldimethyl ammonium chloride | 7173-51-5 | Mason Chemical Company |
| NTA | Nitrilotriacetic acid trisodium salt | 5064-31-3 | Akzo Nobel Functional Chemicals LLC |
| DMAP | N,N-dimethyl amino pyridine | 1122-58-3 | Sigma Aldrich |
| MAA | Methacrylic anhydride | 760-93-0 | Alfa Aeser |
| MEK | Methyl ethyl ketone | 78-93-3 | Fisher Scientific |
| Toluene | Toluene | 108-88-3 | Fisher Scientific |

Weight average molecular weight (M_{w}) was measured by gel permeation chromatography (GPC) using polystyrene standards. Number average molecular weight (Mₙ) was measured by proton nuclear magnetic resonance (¹H-NMR) spectroscopy at a frequency of 600 megahertz (MHz) and by GPC using polystyrene standards. Average degree of functionality was determined by ¹H-NMR spectroscopy at a frequency of 600 MHz. Glass transition temperature (T_{g}) was measured by differential scanning calorimetry (DSC) from 25 to 300°C at a heating rate of 20°C/min. Solution viscosity was measured at 25°C (Brookfield Viscometer; spindle 00) using a 50 wt% solution of the oligomer in either MEK or toluene. The solubility of the oligomers in MEK and toluene are reported as the amount of oligomer that is soluble in the solvent, which is expressed as weight percent (wt%) based on the total weight of the oligomer and the solvent.

### Example 1. Synthesis of PPE-MPP Oligomer (in the presence DBA)

Toluene (216 grams (g)), 102.64 g of MPP, 14 g of TMBPA, 2.17 g of DMBA, 1.17 g of DBA, 0.18 g of DBEDA, 0.09 g of MAQUAT, and 0.33 g of toluene were charged to a 500 milliliter (mL) bubbling polymerization vessel and stirred under nitrogen. Next, 0.87 g of a catalyst solution containing 0.06 g Cu₂O and 0.8 g of HBr (48%) was added to the reaction mixture. After the addition of catalyst solution, oxygen flow was started. The temperature was increases from 25 to 32°C over 15 minutes, held at 32°C for 100 minutes, and then the temperature was increased to 49°C. The flow of oxygen was maintained for an additional 35 minutes, at which point the flow of oxygen was stopped, and 0.46 g of NTA and 5.68 g of water were added to the reaction mixture. The resulting mixture was stirred at 60°C for 2 hours. The layers were separated by centrifugation and the lighter phase was isolated by removal of toluene. The PPE-MPP oligomer was obtained as a powder after drying in a vacuum oven at 110°C for 12 hours. The isolation temperatures can be as high as 300°C. Depending on the isolation temperature and time, the quantity of dibutyl amine moieties can be from 0 to 1 wt%.

### Example 2. Synthesis of PPE-MPP (in the absence of DBA)

PPE-MPP was prepared the same way as in Example 1, except without using the 0.18 g of DBEDA. Depending on the isolation temperature and time, the quantity of dibutyl amine moieties can be from 0 to 1 wt%.

### Example 3. Synthesis of PPE-MPP-2MA Oligomer (from isolated PPE-MPP powder)

150 g of the PPE-MPP oligomer powder was prepared in the same was as Example 1, and the oligomer powder was dissolved in toluene (40 wt/wt) and transferred into a 500 mL 3-neck round bottom flask equipped with a heating mantle, dean-stark condenser, agitator, and thermocouple. The solution was then subjected to azeotropic distillation at 120°C to remove water. After the removal of water, the reaction mixture was cooled to 85°C and 0.64 g of DMAP was added thereto. After complete dissolution of the added DMAP, 9.20 g of MAA was added slowly over 15 minutes using an addition funnel. The reaction temperature was raised to 110°C to obtain a gentle reflux. The reaction was maintained at this temperature under stirring for 4 hours. The PPE-MPP-2MA oligomer product was isolated by cooling of the reaction mixture and precipitating the product into methanol. The product was further dried under vacuum at 110°C for 12 hours. The structure of PPE-MPP-2MA oligomer is shown below:

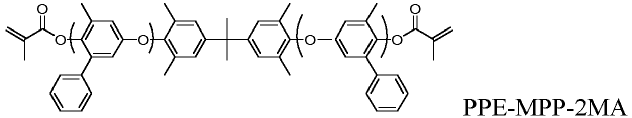

### Example 4. Synthesis of PPE-MPP- Oligomer

The PPE-MPP oligomer was prepared the same way as in Example 1, except the lighter phase was not isolated by removal of toluene. Instead, the toluene solution of the PPE-MPP oligomer was used for the subsequent reaction with the capping agent without the steps of isolating the PPE-MPP oligomer as a powder and then re-dissolving the PPE-MPP oligomer into toluene for the subsequent reaction with the capping agent.

Table 2 shows the properties of the PPE-MPP-2MA oligomers of Examples 1 to 4, where the amounts are listed as a range that encompasses the working examples.

**Table 2**

| Property (units) | |
|---|---|
| Physical form | powders |
| Average degree of functionality | 1.98-2.00 |
| Tg (°C) | 128-151 |
| Mn, number average molecular weight (g/mol) by NMR | 2,300-4,000 |
| Mn, number average molecular weight (g/mol) by GPC | 2,200-3,110 |
| Mw, weight average molecular weight (g/mol) by GPC | 4,100-4,880 |
| Dibutyl amine substituent (wt%) | 0-0.91 |
| Biphenyl (wt%) | 0- 1.0 |
| Solubility, toluene (wt%) | >50 |
| Solubility, methyl ethyl ketone (wt%) | >50 |
| Viscosity, 50 wt% toluene solution at 25°C (cP)* | 107 |
| Viscosity, 50 wt% MEK at 25°C (cP)* | 36 |

| | |
|---|---|
| *as measured using a PPE-MPP-2MA oligomer having an Mₙ of 2,800 g/mol. Molecular weight can be changed based on the amount of dihydric phenol in the oxidative coupling reaction. | |

In addition, minor species were observed by ¹H-NMR spectroscopy in amounts of equal to or less than 1 wt%, based on the total weight of the PPE-MPP-2MA oligomers prepared by the method in Examples 3 and 4, respectively. The minor species (A) and (B) that were observed have the following structures:

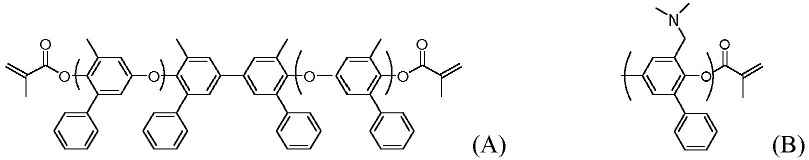

Without being bound by theory, the amount of the biphenyl-containing oligomer (A) can be changed based on factors such as the temperature, the amount of amine catalysts, and the monomer concentrations during the oxidative coupling polymerization to form the PPE-MPP-2MA oligomers. The amount of the amine-substituted oligomer (B), which is also referred to as a Mannich amine-substituted oligomer, can be changed by the amount of DBA used during the oxidative coupling polymerization to form the PPE-MPP-2MA oligomers and by the workup conditions including the temperature used during the isolation of the PPE-MPP-2MA oligomers.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other. Combinations" is inclusive of blends, mixtures, alloys, reaction products, and the like. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some aspects", "an aspect", and so forth, means that a particular element described in connection with the aspect is included in at least one aspect described herein, and may or may not be present in other aspects. In addition, it is to be understood that the described elements may be combined in any suitable manner in the various aspects. A "combination thereof' is open and includes any combination comprising at least one of the listed components or properties optionally together with a like or equivalent component or property not listed.

Unless defined otherwise, technical, and scientific terms used herein have the same meaning as is commonly understood by one of skill in the art to which this application belongs. Unless specified to the contrary herein, all test standards are the most recent standard in effect as of the filing date of this application, or, if priority is claimed, the filing date of the earliest priority application in which the test standard appears.

Unless otherwise indicated, compounds are described using standard nomenclature. The term "hydrocarbon" and "hydrocarbyl" refer to any compound, group, or substituent that includes carbon and hydrogen. The residue can be aliphatic or aromatic, straight-chain, cyclic, bicyclic, branched, saturated, or unsaturated. It can also contain combinations of aliphatic, aromatic, straight chain, cyclic, bicyclic, branched, saturated, and unsaturated hydrocarbon moieties. However, when the hydrocarbyl residue is described as substituted, it may, optionally, contain heteroatoms over and above the carbon and hydrogen members of the substituent residue. Thus, when specifically described as substituted, the hydrocarbyl residue can also contain one or more carbonyl groups, amino groups, hydroxyl groups, or the like. As used herein the term "heterohydrocarbyl" refers to a hydrocarbyl that contains one or more heteroatoms within the backbone of the hydrocarbyl residue. "Aliphatic" means a non-aromatic hydrocarbon group; "aryl" means a mono- or polycyclic aromatic hydrocarbon group, wherein all ring members are carbon; "arylene" means a divalent aryl group; "alkylaryl" means an aryl group substituted with an alkyl group; and "arylalkyl" means an alkyl group substituted with an aryl group. The prefix "hetero" means that the compound or group includes at least one member that is a heteroatom (e.g., 1, 2, or 3 heteroatom(s)), wherein the heteroatom(s) are each independently N, O, S, Si, or P.

In the chemical formulas that are shown by structure, it is to be understood that any position not substituted by an indicated group has its valency filled by a bond as indicated or by a hydrogen atom. Unless substituents are otherwise specifically indicated, each of the foregoing groups can be unsubstituted or substituted, provided that the substitution does not significantly adversely affect synthesis, stability, or use of the compound. "Substituted" means that the compound, group, or atom is substituted with at least one (e.g., 1, 2, 3, or 4) substituents that can each independently be a nitro (-NO₂), cyano (-CN), hydroxy (-OH), halogen, thiol (-SH), thiocyano (-SCN), C₁₋₆ alkyl, C₂₋₆ alkenyl, C₂₋₆ alkynyl, C₁₋₆ haloalkyl, C₁₋₉ alkoxy, C₁₋₆ haloalkoxy, C₃₋₁₂ cycloalkyl, C₅₋₁₈ cycloalkenyl, C₆₋₁₂ aryl, C₇₋₁₃ arylalkyl (e.g., benzyl), C₇₋₁₂ alkylaryl (e.g., toluyl), C₄₋₁₂ heterocycloalkyl, C₃₋₁₂ heteroaryl, C₁₋₆ alkyl sulfonyl (-S(=O)₂-alkyl), C₆₋₁₂ arylsulfonyl (-S(=O)₂-aryl), or tosyl (CH₃C₆H₄SO₂-), instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

## Claims

1. A capped poly(arylene ether) copolymer comprising a reactive end group, wherein the capped poly(arylene ether) copolymer is derived from an alkyl, aryl-phenol; wherein the capped poly(arylene ether) copolymer is of formula (1) or formula (2) 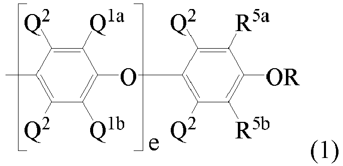 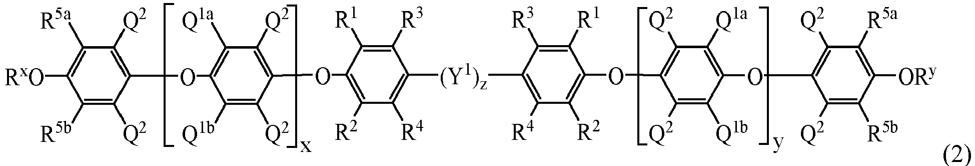 wherein
each occurrence of Q^{1a} and Q^{1b} independently is halogen, C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms;
each occurrence of Q² is independently hydrogen, halogen, unsubstituted or substituted C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms;
each occurrence of R¹, R², R³, and R⁴ is independently hydrogen, halogen, C₁₋₁₂ hydrocarbyl provided that the hydrocarbyl group is not tertiary hydrocarbyl, C₁₋₁₂ hydrocarbylthio, C₁₋₁₂ hydrocarbyloxy, or C₂₋₁₂ halohydrocarbyloxy wherein at least two carbon atoms separate the halogen and oxygen atoms;
x and y represent the relative mole ratios of the arylene ether units wherein x and y are each independently 0 to 50, or 0 to 30, provided that the sum of x and y is at least 2; or e is the number of moles of the arylene ether unit;
each occurrence of R^{5a} is independently Q^{1a} or a (C₁₋₆-hydrocarbyl)(C₁₋₆-hydrocarbyl)aminomethylene group;
each occurrence of R^{5b} is independently Q^{1b} or a (C₁₋₆-hydrocarbyl)(C₁₋₆-hydrocarbyl)aminomethylene group;
provided that the capped poly(arylene ether) copolymer comprises:
at least one repeating unit wherein Q^{1a} is a C₁₋₁₂ primary or secondary alkyl, and Q^{1b} is unsubstituted C₆₋₁₂ aryl,
at least one terminal unit where R^{5a} is a C₁₋₁₂ primary or secondary alkyl, and R^{5b} is unsubstituted C₆₋₁₂ aryl, or
a combination thereof;
Y¹ is a divalent linking group of any one or more of formulas 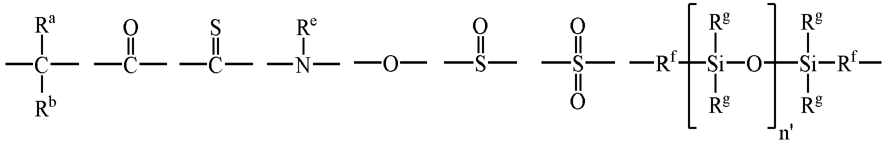 wherein
each occurrence of R^{a}, R^{b}, and R^{e} is independently hydrogen, C₁₋₁₂ hydrocarbyl, or C₁₋₆ hydrocarbylene, optionally wherein R^{a} and R^{b} together are a C₄₋₈ cycloalkylene group,
each occurrence of R^{f} is independently a C₁₋₆ hydrocarbylene group, each occurrence of R^{g} is independently hydrogen, C₁₋₁₂ hydrocarbyl, or C₁₋₁₂ halohydrocarbyl, and
n' is 5 to 50;
z is 0 or 1; and
each occurrence of R is independently 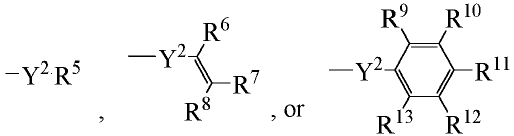 wherein
Y² is a divalent linking group having one of formulas 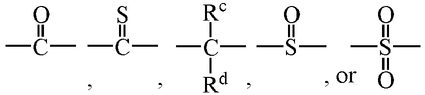 wherein
each occurrence of R^{c} and R^{d} independently is hydrogen or C₁₋₁₂ alkyl,
R⁵ is an epoxide-containing group, a cyanate-containing group, or a C₁₋₁₂ hydrocarbyl optionally substituted with one or two carboxylic acid groups,
each occurrence of R⁶, R⁷, and R⁸ independently is hydrogen, C₁₋₁₈ hydrocarbyl, C₂₋₁₈ hydrocarbyloxycarbonyl, nitrile, formyl, carboxylic acid, imidate, or thiocarboxylic acid, and
each occurrence of R⁹, R¹⁰, R¹¹, R¹², and R¹³ independently is hydrogen, halogen, C₁₋₁₂ alkyl, C₂₋₁₂ alkenyl, hydroxy, amino, maleimide, carboxylic acid, or a C₂₋₂₀ alkyl ester; and
R^{x} and R^{y} are each independently R or a hydrogen atom, provided that at least one of R^{x} and R^{y} is not a hydrogen atom.

2. The capped poly(arylene ether) copolymer of claim 1, wherein the capped poly(arylene ether) copolymer has an average of 1.1 to 2 reactive end groups per molecule; or 1.4 to 2 reactive end groups per molecule; or 1.8 to 2 reactive end groups per molecule.

3. The capped poly(arylene ether) copolymer of claim 1 or 2, wherein the capped poly(arylene ether) copolymer is derived from a reaction of a dihydric phenol and a monohydric phenol comprising a 2-(alkyl)-6-(aryl)phenol;
or wherein the monohydric phenol is a 2-(C₁₋₁₂ primary or secondary alkyl)-6-( unsubstituted C₆₋₁₂ aryl)phenol.

4. The capped poly(arylene ether) copolymer of any one of claims 1 to 3, wherein the capped poly(arylene ether) copolymer is derived from oxidative polymerization of the dihydric phenol and the monohydric phenol comprising a 2-(alkyl)-6-(aryl)phenol in the presence of a catalyst composition.

5. The capped poly(arylene ether) copolymer of claim 1, wherein
each occurrence of Q^{1a} independently is C₁₋₁₂ primary alkyl, or C₁₋₆ primary alkyl;
each occurrence of Q^{1b} independently is C₁₋₁₂ alkyl or C₆₋₁₂ aryl; or C₁₋₆ alkyl or phenyl; Q² is hydrogen; and
R¹, R², R³, and R⁴ are each independently hydrogen, halogen, or C₁₋₁₂ alkyl; or hydrogen or C₁₋₆ alkyl.

6. The capped poly(arylene ether) copolymer of any one of claims 1 to 5, wherein at least one repeating unit is derived from the monohydric phenol of the formula: 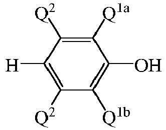 wherein Q^{1a} is C₁₋₆ primary alkyl, Q^{1b} is unsubstituted phenyl, and Q² is as defined in claim 1 or 5.

7. The capped poly(arylene ether) copolymer of any one of claims 1 to 6, wherein the capped poly(arylene ether) copolymer is of formula (2a): 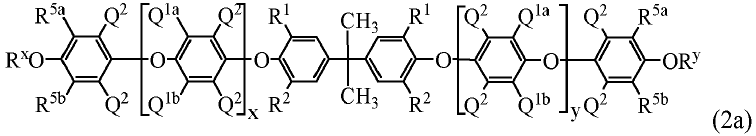
wherein Q^{1a}, Q^{1b}, Q², R¹, R², R^{5a}, R^{5b}, R^{x}, R^{y}, x, and y are as defined in claim 1 or 5;
or wherein R¹ and R² are each independently hydrogen or C₁₋₆ alkyl.

8. The capped poly(arylene ether) copolymer of any one of claims 1 to 7, wherein the capped poly(arylene ether) copolymer is of formula (2b): 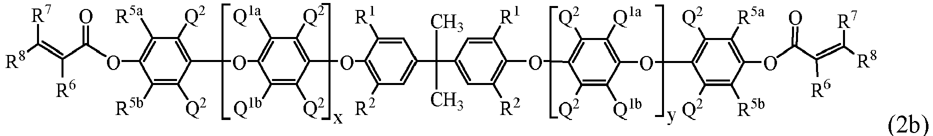 wherein R¹, R², R⁶ to R⁸, R^{5a}, R^{5b}, Q^{1a}, Q^{1b}, Q², x, and y are as defined in claim 1 or 5.

9. The capped poly(arylene ether) copolymer of claim 8, wherein the capped poly(arylene ether) copolymer is derived from copolymerization of tetramethyl bisphenol A and 2-methyl-6-phenylphenol to form an uncapped poly(arylene ether) copolymer, and capping of the uncapped poly(arylene ether) copolymer with methacrylic anhydride to form the capped poly(arylene ether) copolymer.

10. A process for forming the capped poly(arylene ether) copolymer of any one of claims 1 to 8, the process comprising oxidatively copolymerizing a 2-(alkyl)-6-(aryl)phenol and a dihydric phenol in a solvent in the presence of a catalyst composition.

11. The process of claim 10, further comprising reacting a capping agent and an uncapped poly(arylene ether) copolymer comprising a phenolic end group under conditions effective to provide a reaction mixture comprising the capped poly(arylene ether) copolymer.

12. The process of claim 10 or 11, further comprising oxidatively copolymerizing the 2-(alkyl)-6-(aryl)phenol and the dihydric phenol in the solvent in the presence of the catalyst composition to provide a reaction product comprising the uncapped poly(arylene ether) copolymer, wherein the solvent is not removed from the reaction product before the reacting with the capping agent.

13. The process of any one of claims 10 to 12, wherein an additional monohydric phenol different from the 2-(alkyl)-6-(aryl)phenol is present during the oxidatively copolymerizing.

14. A curable thermosetting composition comprising the capped poly(arylene ether) copolymer of any one of claims 1 to 9.

15. An article derived from the curable thermosetting composition of claim 14, wherein the article is a composite, a foam, a fiber, a layer, a coating, an encapsulant, an adhesive, a sealant, a molded component, a prepreg, a casing, a cast article, a laminate, or a combination thereof;
or wherein the article is a metal clad laminate, an electronic composite, a structural composite, or a combination thereof.

## Patentansprüche

1. Verkapptes Poly(arylenether)-Copolymer, umfassend eine reaktive Endgruppe, wobei das verkappte Poly(arylenether)-Copolymer aus einem Alkyl-Aryl-Phenol abgeleitet ist;
wobei das verkappte Poly(arylenether)-Copolymer die Formel (1) oder die Formel (2) aufweist, 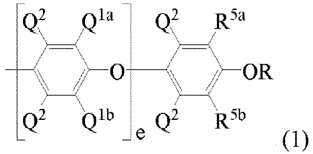 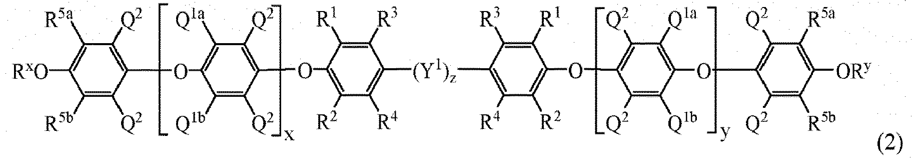 wobei
jedes Auftreten von Q^{1a} und Q^{1b} unabhängig Halogen, C₁₋₁₂-Hydrocarbyl, sofern die Hydrocarbylgruppe kein tertiäres Hydrocarbyl ist, C₁₋₁₂-Hydrocarbylthio, C₁₋₁₂-Hydrocarbyloxy oder C₂₋₁₂-Halohydrocarbyloxy ist, wobei mindestens zwei Kohlenstoffatome die Halogen- und Sauerstoffatome trennen;
jedes Auftreten von Q² unabhängig Wasserstoff, Halogen, unsubstituiertes oder substituiertes C₁₋₁₂-Hydrocarbyl, sofern die Hydrocarbylgruppe kein tertiäres Hydrocarbyl ist, C₁₋₁₂-Hydrocarbylthio, C₁₋₁₂-Hydrocarbyloxy oder C₂₋₁₂-Halohydrocarbyloxy ist, wobei mindestens zwei Kohlenstoffatome die Halogen- und Sauerstoffatome trennen;
jedes Auftreten von R¹, R², R³ und R⁴ unabhängig Wasserstoff, Halogen, C₁₋₁₂-Hydrocarbyl, sofern die Hydrocarbylgruppe kein tertiäres Hydrocarbyl ist, C₁₋₁₂-Hydrocarbylthio, C₁₋₁₂-Hydrocarbyloxy oder C₂₋₁₂-Halohydrocarbyloxy ist, wobei mindestens zwei Kohlenstoffatome die Halogen- und Sauerstoffatome trennen;
x und y die relativen Molverhältnisse der Arylenethereinheiten sind, wobei x und y jeweils unabhängig 0 bis 50 oder 0 bis 30 betragen, vorausgesetzt, dass die Summe von x und y mindestens 2 ist; oder e die Anzahl von Molen der Arylenethereinheit ist;
jedes Auftreten von R^{5a} unabhängig Q^{1a} oder eine (C₁₋₆-Hydrocarbyl)(C₁₋₆-Hydrocarbyl)aminomethylen-Gruppe ist;
jedes Auftreten von R^{5b} unabhängig Q^{1b} oder eine (C₁₋₆-Hydrocarbyl)(C₁₋₆-Hydrocarbyl)aminomethylen-Gruppe ist;
vorausgesetzt, dass das verkappte Poly(arylenether)-Copolymer umfasst:
mindestens eine sich wiederholende Einheit, wobei Q^{1a} ein primäres oder sekundäres C₁₋₁₂-Alkyl ist und Q^{1b} unsubstituiertes C₆₋₁₂-Aryl ist,
mindestens eine endständige Einheit, wobei R^{5a} ein primäres oder sekundäres C₁₋₁₂-Alkyl ist und R^{5b} unsubstituiertes C₆₋₁₂-Aryl ist, oder
eine Kombination davon;
Y¹ eine zweiwertige Bindungsgruppe mit einer oder mehreren der folgenden Formeln ist: 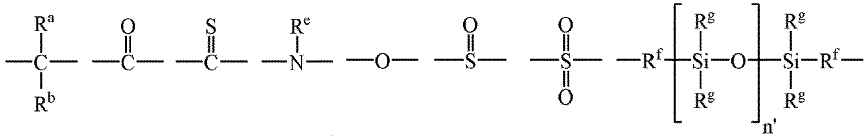 wobei
jedes Auftreten von R^{a}, R^{b} und R^{e} unabhängig Wasserstoff, C₁₋₁₂-Hydrocarbyl oder C₁₋₆-Hydrocarbylen ist, wobei optional R^{a} und R^{b} gemeinsam eine C₄₋₈-Cycloalkylengruppe sind,
jedes Auftreten von R^{f} unabhängig eine C₁₋₆-Hydrocarbylengruppe ist,
jedes Auftreten von R^{g} unabhängig Wasserstoff, C₁₋₁₂-Hydrocarbyl oder C₁₋₁₂-Halohydrocarbyl ist und
n' zwischen 5 und 50 liegt;
z 0 oder 1 ist; und
jedes Auftreten von R unabhängig 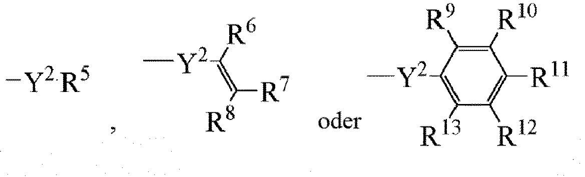 ist, wobei
Y² eine zweiwertige Bindungsgruppe mit einer der folgenden Formeln ist: 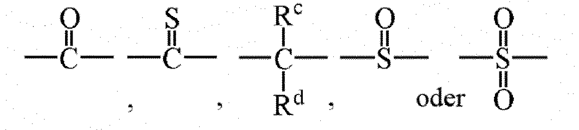 wobei
jedes Auftreten von R^{c} und R^{d} unabhängig Wasserstoff oder C₁₋₁₂-Alkyl ist,
R⁵ eine epoxidhaltige Gruppe, eine cyanathaltige Gruppe oder ein optional mit einer oder zwei Carbonsäuregruppen substituiertes C₁₋₁₂-Hydrocarbyl ist,
jedes Auftreten von R⁶, R⁷ und R⁸ unabhängig Wasserstoff, C₁₋₁₈-Hydrocarbyl, C₂₋₁₈-Hydrocarbyloxycarbonyl, Nitril, Formyl, Carbonsäure, Imidat oder Thiocarbonsäure ist und
jedes Auftreten von R⁹, R¹⁰, R¹¹, R¹² und R¹³ unabhängig Wasserstoff, Halogen, C₁₋₁₂-Alkyl, C₂₋₁₂-Alkenyl, Hydroxy, Amino, Maleimid, Carbonsäure oder ein C₂₋₂₀-Alkylester ist; und
R^{x} und R^{y} jeweils unabhängig R oder ein Wasserstoffatom sind, vorausgesetzt, dass entweder R^{x} und/oder R^{y} kein Wasserstoffatom ist bzw. sind.

2. Verkapptes Poly(arylenether)-Copolymer nach Anspruch 1, wobei das verkappte Poly(arylenether)-Copolymer durchschnittlich 1,1 bis 2 reaktive Endgruppen pro Molekül; oder 1,4 bis 2 reaktive Endgruppen pro Molekül; oder 1,8 bis 2 reaktive Endgruppen pro Molekül aufweist.

3. Verkapptes Poly(arylenether)-Copolymer nach Anspruch 1 oder 2, wobei das verkappte Poly(arylenether)-Copolymer aus einer Reaktion eines zweiwertigen Phenols und eines einwertigen Phenols, umfassend ein 2-(Alkyl)-6-(aryl)phenol, abgeleitet ist;
oder wobei das einwertige Phenol ein 2-(primäres oder sekundäres C₁₋₁₂-Alkyl)-6-(unsubstituiertes C₆₋₁₂-Aryl)phenol ist.

4. Verkapptes Poly(arylenether)-Copolymer nach einem der Ansprüche 1 bis 3, wobei das verkappte Poly(arylenether)-Copolymer aus einer oxidativen Polymerisierung des zweiwertigen Phenols und des einwertigen Phenols, umfassend ein 2-(Alkyl)-6-(aryl)phenol, in Gegenwart einer Katalysatorzusammensetzung abgeleitet ist.

5. Verkapptes Poly(arylenether)-Copolymer nach Anspruch 1, wobei
jedes Auftreten von Q^{1a} unabhängig primäres C₁₋₁₂-Alkyl oder primäres C₁₋₆-Alkyl ist;
jedes Auftreten von Q^{1b} unabhängig C₁₋₁₂-Alkyl oder C₆₋₁₂-Aryl; oder C₁₋₆-Alkyl oder Phenyl ist;
Q² Wasserstoff ist; und
R¹, R², R³ und R⁴ jeweils unabhängig Wasserstoff, Halogen oder C₁₋₁₂-Alkyl; oder Wasserstoff oder C₁₋₆-Alkyl sind.

6. Verkapptes Poly(arylenether)-Copolymer nach einem der Ansprüche 1 bis 5, wobei mindestens eine sich wiederholende Einheit aus dem einwertigen Phenol mit der folgenden Formel abgeleitet ist: 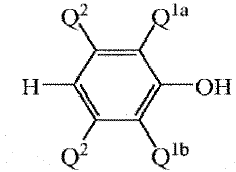 wobei Q^{1a} primäres C₁₋₆-Alkyl ist, Q^{1b} unsubstituiertes Phenyl ist und Q² wie in Anspruch 1 oder 5 definiert ist.

7. Verkapptes Poly(arylenether)-Copolymer nach einem der Ansprüche 1 bis 6, wobei das verkappte Poly(arylenether)-Copolymer die Formel (2a) aufweist: 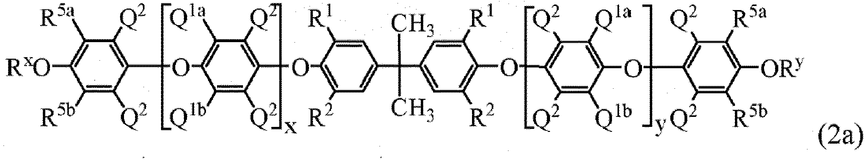
wobei Q^{1a}, Q^{1b}, Q², R¹, R², R^{5a}, R^{5b}, R^{x}, R^{y}, x und y wie in Anspruch 1 oder 5 definiert sind;
oder wobei R¹ und R² jeweils unabhängig Wasserstoff oder C₁₋₆-Alkyl sind.

8. Verkapptes Poly(arylenether)-Copolymer nach einem der Ansprüche 1 bis 7, wobei das verkappte Poly(arylenether)-Copolymer die Formel (2b) aufweist: 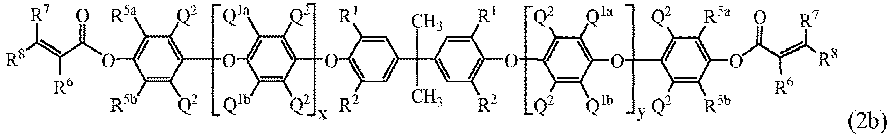 wobei R¹, R², R⁶ bis R⁸, R^{5a}, R^{5b}, Q^{1a}, Q^{1b}, Q², x und y wie in Anspruch 1 oder 5 definiert sind.

9. Verkapptes Poly(arylenether)-Copolymer nach Anspruch 8, wobei das verkappte Poly(arylenether)-Copolymer aus einer Copolymerisierung von Tetramethyl-Bisphenol A und 2-Methyl-6-phenylphenol zum Bilden eines unverkappten Poly(arylenether)-Copolymers und Verkappen des unverkappten Poly(arylenether)-Copolymers mit Methacrylsäureanhydrid zum Bilden des verkappten Poly(arylenether)-Copolymers abgeleitet ist.

10. Prozess zum Bilden des verkappten Poly(arylenether)-Copolymers nach einem der Ansprüche 1 bis 8, wobei der Prozess oxidatives Copolymerisieren eines 2-(Alkyl)-6-(aryl)phenols und eines zweiwertigen Phenols in einem Lösungsmittel in Gegenwart einer Katalysatorzusammensetzung umfasst.

11. Prozess nach Anspruch 10, ferner umfassend Reagieren eines Verkappungsmittels und eines unverkappten Poly(arylenether)-Copolymers, das eine phenolische Endgruppe umfasst, unter Bedingungen, die zum Bereitstellen eines Reaktionsgemischs wirksam sind, welches das verkappte Poly(arylenether)-Copolymer umfasst.

12. Prozess nach Anspruch 10 oder 11, ferner umfassend oxidatives Copolymerisieren des 2-(Alkyl)-6-(aryl)phenols und des zweiwertigen Phenols im Lösungsmittel in Gegenwart der Katalysatorzusammensetzung, um ein Reaktionsprodukt bereitzustellen, welches das unverkappte Poly(arylenether)-Copolymer umfasst, wobei das Lösungsmittel nicht vor dem Reagieren mit dem Verkappungsmittel aus dem Reaktionsprodukt entfernt wird.

13. Prozess nach einem der Ansprüche 10 bis 12, wobei während des oxidativen Copolymerisierens ein zusätzliches einwertiges Phenol vorhanden ist, das sich von dem 2-(Alkyl)-6-(aryl)phenol unterscheidet.

14. Wärmehärtbare Zusammensetzung, die das verkappte Poly(arylenether)-Copolymer nach einem der Ansprüche 1 bis 9 umfasst.

15. Aus der wärmehärtbaren Zusammensetzung nach Anspruch 14 abgeleiteter Artikel, wobei der Artikel ein Verbundstoff, ein Schaum, eine Faser, eine Schicht, eine Beschichtung, ein Verkapselungsstoff, ein Klebemittel, ein Dichtungsmittel, eine ausgeformte Komponente, ein Prepreg, eine Ummantelung, ein gegossener Artikel, ein Laminat oder eine Kombination davon ist;
oder wobei der Artikel ein metallumhülltes Laminat, ein elektronischer Verbundstoff, ein struktureller Verbundstoff oder eine Kombination davon ist.

## Revendications

1. Copolymère poly(arylène éther) coiffé comprenant un groupe terminal réactif, dans lequel le copolymère poly(arylène éther) coiffé est dérivé d'un alkyl, aryl-phénol ; le copolymère poly(arylène éther) coiffé étant de formule (1) ou de formule (2) 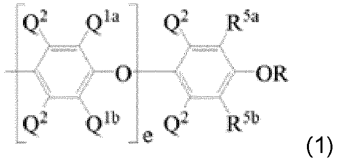 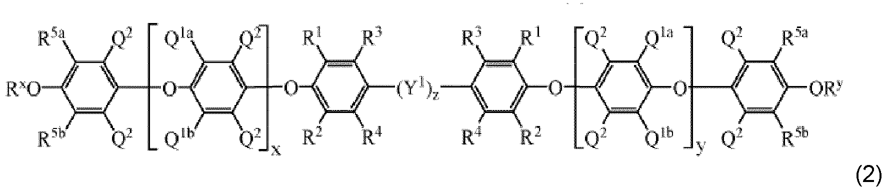 où
chaque occurrence de Q^{1a} et Q^{1b} est indépendamment un halogène, un hydrocarbyle en C₁₋₁₂ à condition que le groupe hydrocarbyle ne soit pas un hydrocarbyle tertiaire, un hydrocarbylthio en C₁₋₁₂, un hydrocarbyloxy en C₁₋₁₂, ou un halohydrocarbyloxy en C₂₋₁₂ dans lequel au moins deux atomes de carbone séparent les atomes d'halogène et d'oxygène ;
chaque occurrence de Q² est indépendamment un hydrogène, un halogène, un hydrocarbyle en C₁₋₁₂ substitué ou non substitué à condition que le groupe hydrocarbyle ne soit pas un hydrocarbyle tertiaire, un hydrocarbylthio en C₁₋₁₂, un hydrocarbyloxy en C₁₋₁₂, ou un halohydrocarbyloxy en C₂₋₁₂ dans lequel au moins deux atomes de carbone séparent les atomes d'halogène et d'oxygène ;
chaque occurrence de R¹, R², R³ et R⁴ est indépendamment un hydrogène, un halogène, un hydrocarbyle en C₁₋₁₂ à condition que le groupe hydrocarbyle ne soit pas un hydrocarbyle tertiaire, un hydrocarbylthio en C₁₋₁₂, un hydrocarbyloxy en C₁₋₁₂, ou un halohydrocarbyloxy en C₂₋₁₂ dans lequel au moins deux atomes de carbone séparent les atomes d'halogène et d'oxygène ;
x et y représentent les rapports molaires relatifs des unités d'arylène éther dans lesquels x et y sont indépendamment compris entre 0 et 50, ou entre 0 et 30, à condition que la somme de x et de y soit au moins égale à 2 ; ou e est le nombre de moles de l'unité d'arylène éther ;
chaque occurrence de R^{5a} est indépendamment Q^{1a} ou un groupe (C₁₋₆-hydrocarbyl)(C₁₋₆-hydrocarbyl)aminométhylène ;
chaque occurrence de R^{5b} est indépendamment Q^{1b} ou un groupe (C₁₋₆ hydrocarbyl)(C₁₋₆-hydrocarbyl)aminométhylène ;
à condition que le copolymère poly(arylène éther) coiffé comprenne :
au moins une unité répétitive dans laquelle Q^{1a} est un alkyle primaire ou secondaire en C₁₋₁₂, et Q^{1b} est un aryle non substitué en C₆₋₁₂,
au moins une unité terminale dans laquelle R^{5a} est un alkyle primaire ou secondaire en C₁₋₁₂, et R^{5b} est un aryle non substitué en C₆₋₁₂, ou
une combinaison de ceux-ci ;
Y¹ est un groupe de liaison divalent selon l'une ou plusieurs des formules 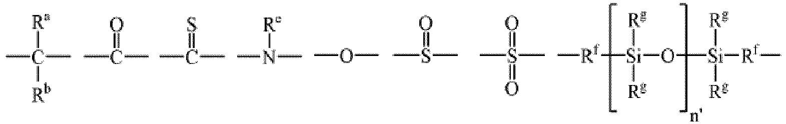 où
chaque occurrence de R^{a}, R^{b} et R^{e} est indépendamment un hydrogène, un hydrocarbyle en C₁₋₁₂ ou un hydrocarbylène en C₁₋₆, éventuellement où R^{a} et R^{b} forment ensemble un groupe cycloalkylène en C₄₋₈,
chaque occurrence de R^{f} est indépendamment un groupe hydrocarbylène en C₁₋₆,
chaque occurrence de R^{g} est indépendamment un hydrogène, un hydrocarbyle en C₁₋₁₂ ou un halohydrocarbyle en C₁₋₁₂, et
n' est compris entre 5 et 50 ;
z vaut 0 ou 1 ; et
chaque occurrence de R est indépendamment 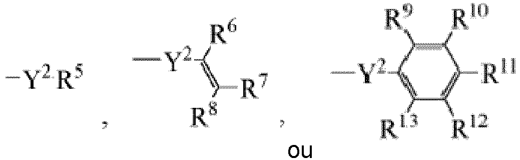 où
Y² est un groupe de liaison divalent ayant l'une des formules 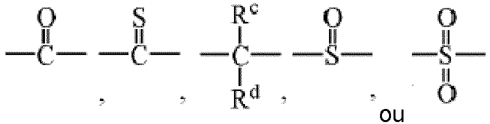 où
chaque occurrence de R^{c} et R^{d} est indépendamment un hydrogène ou un alkyle en C₁₋₁₂,
R⁵ est un groupe contenant un époxyde, un groupe contenant un cyanate, ou un hydrocarbyle en C₁₋₁₂ éventuellement substitué par un ou deux groupes d'acide carboxylique,
chaque occurrence de R⁶, R⁷ et R⁸ est indépendamment un hydrogène, un hydrocarbyle en C₁₋₁₈, un hydrocarbyloxycarbonyle en C₂₋₁₈, un nitrile, un formyle, un acide carboxylique, un imidate ou un acide thiocarboxylique, et
chaque occurrence de R⁹, R¹⁰, R¹¹, R¹² et R¹³ est indépendamment un hydrogène, un halogène, un alkyle en C₁₋₁₂, un alcényle en C₂₋₁₂, un hydroxy, une amine, un maléimide, un acide carboxylique ou un alkyle ester en C₂₋₂₀; et
R^{X} et R^{Y} sont chacun indépendamment R ou un atome d'hydrogène, à condition qu'au moins l'un de R^{X} et R^{Y} ne soit pas un atome d'hydrogène.

2. Copolymère poly(arylène éther) coiffé selon la revendication 1, dans lequel le copolymère poly(arylène éther) coiffé possède en moyenne de 1,1 à 2 groupes terminaux réactifs par molécule ; ou de 1,4 à 2 groupes terminaux réactifs par molécule ; ou de 1,8 à 2 groupes terminaux réactifs par molécule.

3. Copolymère poly(arylène éther) coiffé selon la revendication 1 ou 2, dans lequel le copolymère poly(arylène éther) coiffé est dérivé d'une réaction d'un phénol dihydrique et d'un phénol monohydrique comprenant un 2-(alkyl)-6-(aryl)phénol ; ou
dans lequel le phénol monohydrique est un 2-(alkyle primaire ou secondaire en C₁₋₁₂)-6-(aryle non substitué en C₆₋₁₂)phénol.

4. Copolymère poly(arylène éther) coiffé selon l'une quelconque des revendications 1 à 3, dans lequel le copolymère poly(arylène éther) coiffé est dérivé de la polymérisation oxydative du phénol dihydrique et du phénol monohydrique comprenant un 2-(alkyl)-6-(aryl)phénol en présence d'une composition catalytique.

5. Copolymère poly(arylène éther) coiffé selon la revendication 1, dans lequel
chaque occurrence de Q^{1a} est indépendamment un alkyle primaire en C₁₋₁₂, ou un alkyle primaire en C₁₋₆ ;
chaque occurrence de Q^{1b} est indépendamment un alkyle en C₁₋₁₂ ou un aryle en C₆₋₁₂ ; ou un alkyle en C₁₋₆ ou un phényle ;
Q² est un hydrogène ; et
R¹, R², R³, et R⁴ sont chacun indépendamment un hydrogène, un halogène, ou un alkyle en C₁₋₁₂, ou un hydrogène ou un alkyle en C₁₋₆.

6. Copolymère poly(arylène éther) coiffé selon l'une quelconque des revendications 1 à 5, dans lequel au moins une unité répétitive est dérivée du phénol monohydrique de la formule : 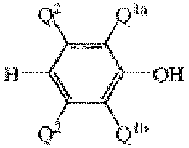 où Q^{1a} est un alkyle primaire en C₁₋₆, Q^{1b} est un phényle non substitué, et Q² est tel que défini dans la revendication 1 ou 5.

7. Copolymère poly(arylène éther) coiffé selon l'une quelconque des revendications 1 à 6, dans lequel le copolymère poly(arylène éther) coiffé est de formule (2a) : 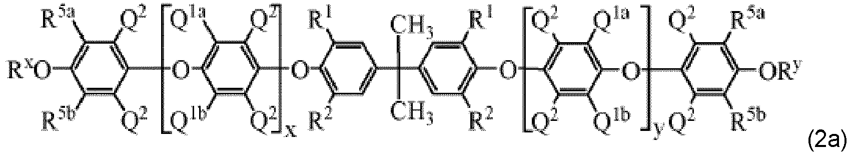
où Q^{1a}, Q^{1b}, Q², R¹, R², R^{5a}, R^{5b}, R^{x}, R^{Y}, x et y sont tels que définis dans la revendication 1 ou 5 ; ou
où R¹ et R² sont chacun indépendamment un hydrogène ou un alkyle en C₁₋₆.

8. Copolymère poly(arylène éther) coiffé selon l'une quelconque des revendications 1 à 7, dans lequel le copolymère poly(arylène éther) coiffé est de formule (2b) : 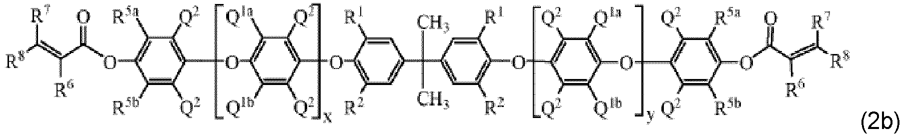 où R¹, R², R⁶ à R⁸, R^{5a}, R^{5b}, Q^{1a}, Q^{1b}, Q², x et y sont tels que définis dans la revendication 1 ou 5.

9. Copolymère poly(arylène éther) coiffé selon la revendication 8, dans lequel le copolymère poly(arylène éther) coiffé est dérivé de la copolymérisation du tétraméthyl bisphénol A et du 2-méthyl-6-phénylphénol pour former un copolymère poly(arylène éther) non coiffé, et du coiffage du copolymère poly(arylène éther) non coiffé avec de l'anhydride méthacrylique pour former le copolymère poly(arylène éther) coiffé.

10. Procédé de formation du copolymère poly(arylène éther) coiffé selon l'une quelconque des revendications 1 à 8, le procédé comprenant la copolymérisation oxydative d'un 2-(alkyl)-6-(aryl)phénol et d'un phénol dihydrique dans un solvant en présence d'une composition catalytique.

11. Procédé selon la revendication 10, comprenant en outre la réaction d'un agent de coiffage et d'un copolymère poly(arylène éther) non coiffé comprenant un groupe terminal phénolique dans des conditions efficaces pour produire un mélange réactionnel comprenant le copolymère poly(arylène éther) coiffé.

12. Procédé selon la revendication 10 ou 11, comprenant en outre la copolymérisation oxydative du 2-(alkyl)-6-(aryl)phénol et du phénol dihydrique dans le solvant en présence de la composition catalytique pour produire un produit de réaction comprenant le copolymère poly(arylène éther) non coiffé, le solvant n'étant pas retiré du produit de réaction avant la réaction avec l'agent de coiffage.

13. Procédé selon l'une quelconque des revendications 10 à 12, dans lequel un phénol monohydrique supplémentaire différent du 2-(alkyl)-6-(aryl)phénol est présent pendant la copolymérisation oxydative.

14. Composition thermodurcissable comprenant le copolymère poly(arylène éther) coiffé selon l'une quelconque des revendications 1 à 9.

15. Article dérivé de la composition thermodurcissable selon la revendication 14, dans lequel l'article est un composite, une mousse, une fibre, une couche, un revêtement, un encapsulant, un adhésif, un produit d'étanchéité, un composant moulé, un préimprégné, un boîtier, un article moulé, un stratifié, ou une combinaison de ceux-ci ;
ou dans lequel l'article est un stratifié à revêtement métallique, un composite électronique, un composite structurel, ou une combinaison de ceux-ci.
